# EUROPÄISCHE PATENTSCHRIFT

(11) **EP 4 612 262 B1**
(45) Veröffentlichungstag und Bekanntmachung des Hinweises auf die Patenterteilung: **29.04.2026**
(21) Anmeldenummer: 23800408.9
(22) Anmeldetag: 31.10.2023
(51) Int. Cl.: C10M 133/04, C07C 69/12, C10M 149/22, C10M 171/00

(54) **HERSTELLUNGSVERFAHREN FÜR QUATERNÄRE AMMONIUM-CARBOXYLAT-VERBINDUNGEN UND DADURCH ERHÄLTLICHES ADDITIV FÜR KÜHLSCHMIERSTOFF-EMULSIONEN**
PROCESS FOR THE PREPARATION OF QUATERNARY AMMONIUM CARBOXYLATE COMPOUNDS AND COOLING LUBRICANT EMULSION ADDITIVE OBTAINABLE THEREBY
PROCÉDÉ DE PRÉPARATION DE COMPOSÉS D'AMMONIUM QUATERNAIRE CARBOXYLATE ET ADDITIF POUR ÉMULSIONS DE LUBRIFIANT RÉFRIGÉRANT AINSI OBTENU

(30) Priorität: 03.11.2022 EP 22205238
(43) Veröffentlichungstag der Anmeldung: 10.09.2025
(73) Patentinhaber: Blaser Swisslube AG, 3415 Hasle-Rüegsau (CH)
(72) Erfinder: KATZENMEIER, Heinz, 3432 Lützelflüh (CH)
(74) Vertreter: Jacobi, Markus Alexander
(86) Internationale Anmeldenummer: PCT/EP2023/080313
(87) Internationale Veröffentlichungsnummer: WO 2024/094669

(56) Entgegenhaltungen:
- WO-A2-2010/136105
- DE-A1- 19 738 640
- US-A- 3 024 283

## Beschreibung

Die Erfindung betrifft ein Herstellungsverfahren für quaternäre Ammonium-Carboxylat-Verbindungen, die Verwendung einer organischen quaternären Ammonium-Carboxylat-Verbindung A-Carb als Additiv in einer Kühlschmierstoff-Emulsion für Werkzeugmaschinen und ein Polymer mit Wiederholungseinheiten umfassend quaternäre Ammoniumgruppen mit Carboxylat-Ionen als Gegen-Ionen. Ferner betrifft die Erfindung einen Kühlschmierstoff umfassend das Polymer sowie eine Vorrichtung zur Ausführung des Verfahrens.

Bei einer spanenden Bearbeitung von Werkstücken wird diesen durch mechanisches Abtrennen von überschüssigem Material in Form von Spänen mit einem Werkzeug eine bestimmte Form gegeben. Die spanenden Fertigungsverfahren umfassen beispielsweise Drehen, Fräsen, Bohren und Schleifen. Aufgrund von Reibung wird dabei die eingebrachte mechanische Arbeit fast vollständig in Wärme umgewandelt.

Kühlschmierstoff-Emulsionen, kurz KSS-Emulsionen, werden in der Metallverarbeitenden Industrie breit zur zerspanenden Metallbearbeitung eingesetzt. KSS-Emulsionen umfassen in der Regel eine Ölkomponente, Puffer-Komponenten, Emulgatoren und verschiedene Additiven. KSS-Konzentrate sind homogene flüssige Produkte mit öliger Konsistenz.

Die KSS-Emulsionen werden eingesetzt, um das bearbeitete Werkstück und/oder das Werkzeug zu kühlen und zu schmieren. Dazu werden die Kühlschmierstoff-Emulsionen üblicherweise aus einem Tank gefördert und auf das Werkzeug bzw. das Werkstück aufgetragen. Die Kühlschmierstoff-Emulsion wird anschließend wieder aufgefangen und zurückgeführt. Während des Einsatzes der Kühlschmierstoff-Emulsion wird diese aufgefangen und zusammen mit aus dem spanenden Fertigungsverfahren entnommenen Spänen ausgetragen. Die Kühlschmierstoff-Emulsion haftet dabei den ausgetragenen Spänen an.

Vor einer erneuten Verwendung der Kühlschmierstoff-Emulsion muss diese somit von den Spänen und anderen Verunreinigungen befreit werden. Zudem erfolgt durch das feine Versprühen der Kühlschmierstoff-Emulsion bei den in den Maschinen eingesetzten, hohen Drücken eine Verdunstung von Wasser. Dies bewirkt einerseits einen relevanten Verlust an Kühlschmierstoff-Emulsion, andererseits eine Anreicherung der Aktivkomponenten wie Ölen, Additiven und dergleichen in der Kühlschmierstoff-Emulsion aufgrund der Verdunstung.

Zum Ausgleich der ausgetragenen Kühlschmierstoff-Emulsion und der Wasserverdunstung muss regelmäßig Kühlschmierstoff-Emulsion niedriger Konzentration nachgefüllt werden, was als "Nachfahren" bezeichnet wird.

Aus GB 2547056 A ist ein System zum Bestimmen des Zustands einer Flüssigkeit in einem Tank bekannt. Das System umfasst einen oder mehrere Sensoren, mit denen jeweils eine Eigenschaft der Flüssigkeit bestimmt werden kann. Abhängig von den gemessenen Eigenschaften wird bestimmt, welche Menge eines Konzentrats und/oder welche Menge an Wasser zugegeben werden muss, um einen gewünschten Zustand der Flüssigkeit einzustellen.

US 5,389,546 beschreibt ein kontinuierliches Titrationsverfahren zur Bestimmung des Alkaligehalts einer zur Metallbearbeitung eingesetzten Flüssigkeit. Bei dem Verfahren ist vorgesehen, kontinuierlich eine Probe der zur Metallbearbeitung eingesetzten Flüssigkeit zu entnehmen, mit einem kontinuierlich steigenden Strom einer Maßlösung zu vermischen und den pH-Wert kontinuierlich zu bestimmen. Aus dem Verhältnis der beiden Volumenströme lässt sich der Alkaligehalt berechnen. Der Flüssigkeitsstrom während der Messung wird dabei kontinuierlich entsorgt. Zur Kontrolle eines eingesetzten Sensors kann alternativ eine Probe mit bekanntem pH-Wert zugeführt werden.

WO 2020/126257 offenbart ein Verfahren zur Bestimmung mindestens eines Parameters und/oder zur Konditionierung einer Kühl-Schmierstoffemulsion für Werkzeugmaschinen, wobei die Kühl-Schmierstoffemulsion in einem Tank bereitgestellt wird, wobei Kühl-Schmierstoffemulsion aus dem Tank entnommen wird und unter Verwendung mindestens eines Sensors mindestens ein Parameter der Kühl-Schmierstoffemulsion erfasst wird. Auch eine Vorrichtung zur Durchführung des Verfahrens ist offenbart. US3024283 beschreibt einen Prozess zur Herstellung quaternärer Ammoniumacetate ausgehend von den entsprechenden Chloriden unter Verwendung eines Ionentauschers. Eine Lösung der quaternären Ammoniumverbindung wird über eine Säule eines Kationenaustauschers geleitet. Die Säule wird anschließend mit einer Säurelösung gewaschen.

Eine Schwierigkeit vieler KSS-Emulsionen besteht darin, dass diese im Laufe des Betriebs einer Werkzeugmaschine und im Zuge des regelmäßigen Nachfahrens mit frischer KSS-Emulsion aufgrund der Anreicherung bestimmter Komponenten zur Schaumbildung neigen. Diese Schaumbildung kann in mehrfacher Hinsicht nachteilig sein.

Zum einen verhindert die Schaumbildung eine zuverlässige Bestimmung des Füllpegels der KSS-Emulsion im Tank, da der Schaum im Wesentlichen aus Luft besteht, die von einem dünnen Film der KSS-Emulsion umgeben ist. Hierdurch wird den Füllstandsensoren ein Füllstand suggeriert, der höher ist als der tatsächliche Füllpegel. Dies kann dazu führen, dass zu spät oder mit zu geringen Mengen nachgefahren wird. Auch die Messung von relevanten Parametern der KSS-Emulsion, die anhand deren die erforderliche Nachfahr-Konzentration bestimmt wird, wird verfälscht, wenn Schaum in die entsprechenden Detektoren, z.B. Refraktometer und/oder Leitfähigkeitssensoren, etc. gelangt.

Des Weiteren können durch die Schaumbildung Späne nicht effizient aus der KSS-Emulsion entfernt werden, da diese teilweise auf der Schaumoberfläche bleiben. Hierdurch entsteht die Gefahr einer Schädigung der Werkzeugmaschinen und der zu verarbeitenden Werkstücke aufgrund von Metallspänen, die in die Werkzeugmaschine wieder eingetragen werden und den Verschleiß erhöhen. Außerdem kann Schaum die Wirksamkeit der KSS-Emulsion beim Kühlen und Schmieren der Werkzeugmaschine verringern, da der Schaum aufgrund des hohen Luftanteils eine deutlich geringere Kühlleistung und schlechtere Schmiereigenschaften hat als die KSS-Emulsion selbst. Auch dies führt regelmäßig zu Schäden an der Werkzeugmaschine aufgrund höheren Verschleißes.

Aus diesen Gründen werden KSS-Emulsionen oder deren Konzentraten oft Additive zugegeben, die die Schaumbildung stören und die Neigung der KSS-Emulsionen zur Schaumbildung verringern.

Es wurde gefunden, dass unter anderem bestimmte organische quaternäre Ammoniumsalze, insbesondere Ammonium-Halogenid-Verbindungen, bereits in geringen Konzentration die Neigung von Kühlschmierstoff-Emulsionen zur Schaumbildung effizient verringern können und daher als entsprechende Additive geeignet sind.

Insbesondere wurde dies für polymere quaternäre Ammoniumsalze gefunden, die Wiederholungseinheiten umfassend quaternäre Ammonium-Gruppen aufweisen.

Mehrere solcher polymeren quaternären Ammonium-Halogenid-Verbindungen sind unter den Trivialnamen "Polyquaternium" bekannt. Zu diesen Verbindungen gehören beispielsweise:
Copolymere von Diallyldimethylammoniumchlorid und hydroxyethylcellulose (Polyquaternium-4), Copolymere von Acrylamid und quaternisiertem Dimethylammoniumethylmethacrylat (Polyquaternium-5), Poly(diallyldimethylammoniumchlorid) (Polyquaternium-6), Copolymere von Acrylamid und Diallyldimethylammoniumchlorid (Polyquaternium-7), Copolymere von Vinylpyrrolidon und quaternisiertem Dimethylaminoethylmethacrylat (Polyquaternium-11), Homopolymere von quaternisiertem Trimethylaminoethylmethacrylat) (Polyquaternium-14), Copolymere von Acrylamid und quaternisiertem Dimethylaminoethylmethacrylat (Polyquaternium-15), Copolymere von Vinylpyrrolidon und quaternisiertem Vinylimidazol (Polyquaternium-16), Copolymere von Acrylsäure und Diallyldimethylammoniumchlorid (Polyquaternium-22), Copolymere von Vinylpyrrolidon und Methacrylamidopropyl-Trimethylammoniumchlorid (Polyquaternium-28), Poly(acrylamid-2-methacryloxyethyltrimethylammoniumchloride) (Polyquaternium-32), Copolymere von quaternisiertem Trimethylaminoethylacrylat und Acrylamid (Polyquaternium-33), Poly(2-methacryloxyethyltrimethyl-ammoniumchlorid) (Polyquaternium-37), Terpolymere von Acrylsäure, Acrylamid und Diallyldimethylammoniumchlorid (Polyquaternium-39), Poly[oxyethylen-(dimethyliminio)ethylen(dimethyliminio)ethylendichlorid] (Polyquaternium-42), Terpolymere von Vinylcaprolactam, Vinylpyrrolidon und quaternisiertem Vinylimidazol (Polyquaternium-46), und Terpolymere von Acrylsäure, Methacrylamidopropyltrimethylammoniumchlorid und Methylacrylat (Polyquaternium-47).

Darunter besonders geeignet als Additiv zum Verringern der Neigung von Kühlschmierstoff-Emulsionen zur Schaumbildung ist Poly[oxyethylen-(dimethyliminio)ethylen(dimethyliminio)ethylendichlorid] (Polyquaternium-42).

Allerdings wurde beobachtet, dass bei längerem Betrieb von Werkzeugmaschinen unter Verwendung von KSS-Emulsionen enthaltend diese organischen quaternären Ammonium-Halogenid-Verbindungen in erheblichem Ausmaß eine Korrosion der Maschinen-Bauteile und der zu verarbeitenden Werkstücke aufgetreten ist.

Bislang konnte die Korrosion verringert werden, indem die gesamte Kühlschmierstoff-Emulsion regelmäßig ausgetauscht und entsorgt wurde, bevor oder sobald erste Korrosionserscheinungen aufgetreten sind. Dies führt jedoch zu regelmäßigen Unterbrechungen im Betrieb der Werkzeugmaschinen und zu großen Mengen an Abfall, was aus ökologischen und wirtschaftlichen Gründen unbefriedigend ist. Alternativ kann die Menge des Kühlschmierstoffs als solches in der Kühlschmierstoff-Emulsion vergrößert werden, wodurch die Schmierleistung der Emulsion verbessert wird. Dies kann die Korrosion deutlich hinauszögern, ist jedoch mit einem erhöhten Verbrauch des Kühlschmierstoffs verbunden, was ebenfalls aus ökologischen und wirtschaftlichen Gründen nicht erwünscht ist.

Es besteht daher ein Bedarf an Additiven für Kühlschmierstoff-Emulsionen, die in gleicher Weise eingesetzt werden können wie die oben beschriebenen Ammonium-Halogenid-Verbindungen, bei denen jedoch die Korrosion der Werkzeugmaschinen und der zu verarbeitenden Werkstücke in geringerem Ausmaß auftritt.

Überraschend wurde gefunden, dass die Korrosion deutlich verringert oder sogar dauerhaft vermieden werden kann, wenn in den Additiven die Halogenid-Ionen zumindest teilweise durch Carboxylat-Ionen ausgetauscht sind.

Ein Gegenstand der Erfindung ist daher die Verwendung einer organischen quaternären Ammonium-Carboxylat-Verbindung A-Carb als Additiv in einer Kühlschmierstoff-Emulsion für Werkzeugmaschinen, bevorzugt zur Minderung der Schaumbildungsneigung. Bevorzugt sind die Carboxylat-Ionen hierbei Alkylcarboxylat-Ionen mit 2 bis 5, bevorzugt 2 bis 4, mehr bevorzugt 2 bis 3 Kohlenstoffatomen. Besonders bevorzugt sind die Carboxylat-Ionen Acetat-Ionen.

Wie bereits oben angegeben, sind polymere quaternäre Ammoniumsalze, die Wiederholungseinheiten umfassend quaternäre Ammonium-Gruppen aufweisen, besonders als Additive zur Minderung der Schaumbildungsneigung geeignet. Daher ist die verwendete quaternäre Ammonium-Carboxylat-Verbindung A-Carb bevorzugt ein flüssiges oder wasserlösliches Polymer P-Carb mit Wiederholungseinheiten umfassend quaternäre Ammoniumgruppen. Beispielsweise kann die verwendete quaternäre Ammonium-Carboxylat-Verbindung A-Carb eines oder mehrere der oben genannten Polymere mit dem Trivialnamen "Polyquaternium" sein, bei denen die Halogenid-Ionen zumindest teilweise durch Carboxylat-Ionen ersetzt wurden.

Damit eine wesentliche Verringerung der Korrosion erzielt werden kann, ist vorgesehen, dass im Polymer P-Carb mindestens 50 Mol-%, bevorzugt mindestens 90 Mol-% der Gegen-Ionen der Ammoniumgruppen Carboxylationen sind. Es wurde überraschend festgestellt, dass für eine dauerhafte Vermeidung von Korrosion beim Betrieb der Werkzeugmaschinen kein vollständiger Austausch von Halogenid-Ionen gegen Carboxylationen erforderlich ist. Bevorzugt sind daher 75 bis 99 Mol-%, mehr bevorzugt 85 bis 98 Mol-%, mehr bevorzugt 90 bis 95 Mol-% der Gegen-Ionen der der Ammoniumgruppen im Polymer P-Carb Carboxylat-Ionen.

Bevorzugt werden als Polymere P-Carb Polymere umfassend Wiederholungseinheiten der Struktur (I) verwendet 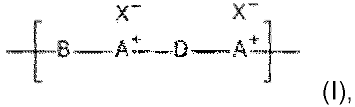 wobei
A⁺ ausgewählt ist aus kationischen Gruppen der Strukturen (A1) und (A2), bevorzugt (A1); 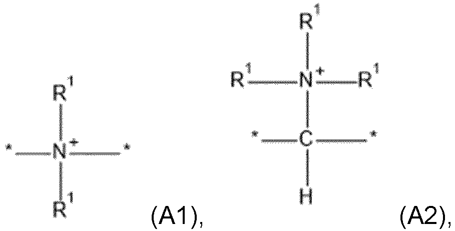
B ausgewählt ist aus Gruppen der Strukturen (B1) und (B2), bevorzugt (B1); 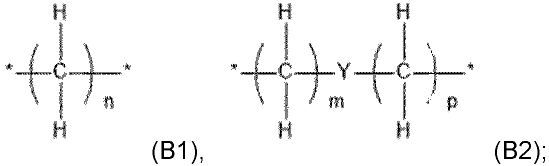
D ausgewählt ist aus Gruppen der Struktur (B2);
X⁻ ausgewählt sind aus Carboxylat-Ionen, bevorzugt Alkylcarboxylat-Ionen mit 2 bis 5 Kohlenstoffatomen, und Halogenid-Ionen, bevorzugt Chlorid-Ionen, wobei mindestens 50 Mol-%, bevorzugt mindestens 90 Mol-% der X⁻ im Polymer P-Carb Carboxylat-Ionen sind;
R¹ unabhängig voneinander ausgewählt sind aus Alkylgruppen mit 1 bis 4 Kohlenstoffatomen, bevorzugt Methyl;
Y ausgewählt ist aus O, S und N(R²), bevorzugt O;
R² ausgewählt ist aus einem Wasserstoffatom und Alkylgruppen mit 1 bis 4 Kohlenstoffatomen, bevorzugt Methyl;
n, m und p ausgewählt sind aus 2, 3 und 4; und
* die Bindungsstellen der jeweiligen Gruppe in der Polymerkette kennzeichnet.

Bevorzugt umfasst das Polymer P-Carb neben den Wiederholungseinheiten der Struktur (I) keine weiteren Wiederholungseinheiten.

Das Polymer P-Carb liegt bevorzugt als Lösung, mehr bevorzugt als wässrige Lösung, mit einer Konzentration von 30 bis 99 Gew.-%, bevorzugt 35 bis 90 Gew.-%, mehr bevorzugt 40 bis 80 Gew.-%, mehr bevorzugt 45 bis 70 Gew.-%, mehr bevorzugt 50 bis 65 Gew.-% an Polymer P-Carb, bezogen auf das Gewicht der konzentrierten Lösung, vor.

Konzentrierte wässrige Lösungen des Polymers P-Carb haben bei 20 °C beispielsweise eine Dichte im Bereich von 1,050 bis 1,250 g/cm³, oftmals im Bereich von 1,100 bis 1,200 g/cm³, bevorzugt im Bereich von 1,120 bis 1,180 g/cm³, mehr bevorzugt im Bereich von 1,140 bis 1,160 g/cm³, mehr bevorzugt im Bereich von 1,145 bis 1,154 g/cm³. Ferner haben konzentrierte wässrige Lösungen des Polymers P-Carb beispielsweise eine kinematische Viskosität bei 20 °C, gemessen mittels Stabinger-Viskosimeter in Anlehnung an DIN EN 16896:2017-02, im Bereich von 350 bis 600 mm²/s, oftmals im Bereich von 400 bis 550 mm²/s, bevorzugt im Bereich von 450 bis 500 mm²/s, mehr bevorzugt im Bereich von 470 bis 490 mm²/s, und/oder bei 40 °C, gemessen mittels Stabinger-Viskosimeter in Anlehnung an DIN EN 16896:2017-02, beispielsweise im Bereich von 100 bis 300 mm²/s, oftmals im Bereich von 120 bis 280 mm²/s, bevorzugt im Bereich von 150 bis 250 mm²/s, mehr bevorzugt im Bereich von 190 bis 210 mm²/s.

Vorzugsweise haben die Wiederholungseinheiten der Struktur (I) die Struktur (la) 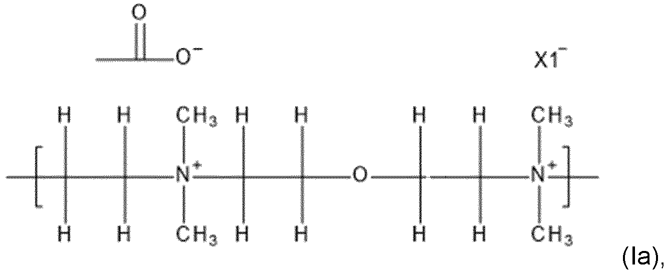 wobei
X1⁻ ausgewählt ist aus Chlorid-Ionen und Acetat-Ionen, und bevorzugt mindestens 50 Mol-%, mehr bevorzugt mindestens 80 Mol-%, mehr bevorzugt mindestens 90 Mol-% der X1⁻ im Polymer P-Carb Acetat-Ionen sind.

Besonders bevorzugt ist das Polymer P-Carb Poly(oxyethylen(dimethyliminio)-ethylen-(dimethyliminio)-ethylen-(acetat)ₓ(chlorid)_{y}, wobei x einen Wert von 1,6 bis 2, bevorzugt von 1,7 bis 1,95, mehr bevorzugt von 1,8 bis 1,9 hat und y einen Wert von 0 bis 0,4, bevorzugt 0,05 bis 0,3, mehr bevorzugt von 0,1 bis 0,2 hat.

Weitere Gegenstände der Erfindung sind ein Kühlschmierstoff umfassend das Polymer P-Carb, bevorzugt in einer Menge von 0,05 bis 5 Gew.-%, bevorzugt 0,1 bis 2 Gew.-%, mehr bevorzugt 0,15 bis 1 Gew.-%, mehr bevorzugt 0,2 bis 0,5 Gew.-%, bezogen auf das Gewicht des Kühlschmierstoffs, sowie eine Kühlschmierstoff-Emulsion umfassend den Kühlschmierstoff, bevorzugt in einer Menge von 5,5 bis 15 Gew.-%, bevorzugt 6,5 bis 9 Gew.-%, mehr bevorzugt 7 bis 8,5 Gew.-%, bezogen auf das Gewicht der Kühlschmierstoff-Emulsion.

Ferner ist Gegenstand der Erfindung das Polymer P-Carb umfassend Wiederholungseinheiten der Struktur (I), wie oben beschrieben. Dieses ist als Additiv zur Minderung der Schaumbildungsneigung in Kühl-Schmierstoff-Emulsionen bei gleichzeitiger Verringerung von Korrosion besonders geeignet.

Die quaternäre Ammonium-Carboxylat-Verbindung A-Carb kann erhalten werden durch Umsalzen einer quaternären Ammoniumhalogenid-Verbindung A-Halo, beispielsweise mithilfe eines Ionentauschers mit einer kationischen stationären Phase, die mit Carboxylat-Ionen beladen ist.

Üblicherweise werden bei Ionentauschverfahren die Edukte in stark verdünnter Form über den Ionentauscher geführt, bis dieser erschöpft ist. Hierdurch werden allerdings auch die Produkte in stark verdünnter Form erhalten. Zwar können die Verdünnten Produkte als solches direkt als Additiv in Kühlschmierstoff-Emulsionen eingesetzt werden, allerdings ist es oft erforderlich, die Additive zu lagern oder zu transportieren, wenn sie nicht sofort verwendet werden. Die Lagerung und der Transport von stark verdünnten Produkten ist jedoch sowohl aus ökologischer als auch aus wirtschaftlicher Sicht unerwünscht. Dies kann bislang durch aufkonzentrieren der verdünnten Produkte umgangen werden, was jedoch zusätzlichen Aufwand und erhöhten Energieverbrauch erfordert.

Überraschend wurde nun gefunden, dass quaternäre Ammonium-Carboxylat-Verbindungen A-Carb, insbesondere polymere quaternäre Ammonium-Carboxylat-Verbindungen P-Carb in deutlich höher konzentrierter Form direkt aus dem Ionentausch-Prozess erhalten werden können, ohne dass eine Erhöhung des Chloridgehalts im Produkt beobachtet wird, wenn diese in konzentrierter Form auf den Ionentauscher gegeben werden und anschließend mit einem anderen Fluid über den Ionentauscher gedrückt werden.

Ein weiterer Gegenstand der Erfindung ist daher ein Verfahren zur Herstellung einer quaternären Ammonium-Carboxylat-Verbindung A-Carb, umfassend die Schritte:
a) Durchleiten einer quaternären Ammonium-Halogenid-Verbindung A-Halo, vorzugsweise einer quaternären Ammonium-Chlorid-Verbindung, durch ein Ionentausch-Gefäß, enthaltend einen Anionentauscher T, der mit Carboxylat-Ionen beladen ist, um die quaternäre Ammonium-Halogenid-Verbindung A-Halo zumindest teilweise in eine quaternäre Ammonium-Carboxylat-Verbindung A-Carb umzusalzen und eine Zusammensetzung Z1 umfassend die Ammonium-Carboxylat-Verbindung A-Carb zu erhalten, und um den Anionentauscher T zumindest teilweise mit Halogenid-Ionen, vorzugsweise Chlorid-Ionen, zu beladen;
b) Durchleiten mindestens eines Carboxylat-enthaltenden Regenerierungsmittels R-Carb durch das Ionentausch-Gefäß, um den mit Halogenid-Ionen beladenen Anionentauscher T zumindest teilweise mit Carboxylat-Ionen zu beladen, und das Carboxylat enthaltende Regenerierungsmittel R-Carb in eine Zusammensetzung Z2 umfassend ein Halogenidsalz R-Halo umzuwandeln;
wobei die Sequenz der Schritte a) und b) mit Schritt a) oder Schritt b) beginnen kann und wiederholt durchgeführt wird, und wobei die quaternäre Ammonium-Carboxylat-Verbindung A-Carb sich von der quaternären Ammonium-Halogenid-Verbindung A-Halo dadurch unterscheidet, dass die Halogenid-Ionen zumindest teilweise durch Carboxylat-Ionen ausgetauscht sind, und wobei das Ionentausch-Gefäß mindestens eine erste Öffnung und mindestens eine zweite Öffnung hat, und die quaternäre Ammonium-Halogenid-Verbindung A-Halo in flüssiger Form oder als Lösung enthaltend mindestens 30 Gew.-% der Ammonium-Halogenid-Verbindung A-Halo, bezogen auf das Gewicht der Lösung, in das Ionentausch-Gefäß durch die erste Öffnung eingeführt wird, und durch Einführen mindestens eines anderen Fluids F, bevorzugt entionisierten Wassers, in die erste Öffnung durch das Ionentausch-Gefäß in Richtung der zweiten Öffnung gedrückt wird.

Die als Edukt eingesetzte quaternäre Ammonium-Halogenid-Verbindung A-Halo stimmt mit der zu erhaltenden quaternären Ammonium-Carboxylat-Verbindung A-Carb im kationischen Teil (quaternäres Ammoniumion) überein, und unterscheidet sich von dieser darin, dass die Gegenionen überwiegend Halogenid-Ionen, bevorzugt Chlorid-Ionen sind.

Die Ammonium-Halogenid-Verbindung A-Halo liegt in flüssiger oder in konzentrierter gelöster Form vor. Bevorzugt liegt die Ammonium-Halogenid-Verbindung A-Halo in Form einer wässrigen Lösung enthaltend 35 bis 95 Gew.-%, mehr bevorzugt 40 bis 85 Gew.-%, mehr bevorzugt 45 bis 75 Gew.-%, mehr bevorzugt 55 bis 65 Gew.-% der Ammonium-Halogenid-Verbindung A-Halo, bezogen auf das Gewicht der Lösung, vor.

Der Anionentauscher T kann ein beliebiger Anionentauscher sein, der den Austausch von Halogend-Ionen gegen Carboxylat-Ionen in einem durch den Ionentauscher geleiteten Salz ermöglicht. Insbesondere ist dieser nicht in dem durchgeleiteten Fluid F, dem durchgeleiteten Regenerierungsmittel R-Carb, der Ammonium-Halogenid-Verbindung A-Halo und der Ammonium-Carboxylat-Verbindung A-Carb löslich. Geeignete Anionentauscher sind beispielsweise unlösliche Polymere, die kationische Einheiten aufweisen, deren Gegenionen gegen Halogenid-Ionen und Carboxylat-Ionen ausgetauscht werden können. Bevorzugt ist der Anionentauscher T ein gelförmiges Polymerharz umfassend quaternäre Ammoniumgruppen auf der Oberfläche. Mehr bevorzugt ist der Anionentauscher T ein starkbasischer Anionentauscher.

Kommerziell erhältliche Anionentauscher T sind beispielsweise unter Marke LEWATIT^{®} der Firma LANXESS erhältlich. Mehr bevorzugt ist der Anionentauscher T ein vernetztes, gelförmiges Styrolpolymer mit quaternären Ammoniumgruppen, mehr bevorzugt mit einer mittleren Korngröße (Volumen-Medianwert d50, gemessen mittels Laserbeugung) von 570 bis 670 µm.

Das Regenerierungsmittel R-Carb kann ein beliebiges Regenerierungsmittel sein, das den Austausch von Halogenid-Ionen, mit denen der Anionentauscher T beladen ist, gegen Carboxylat-Ionen ermöglicht. Bekannte Verfahren zum Beladen von Anionentauschern mit Carboxylat-Ionen wie Acetat-Ionen erfolgen typischerweise in mindestens zwei Schritten. In einem ersten Schritt wird hierbei der mit Halogenid-Ionen beladene Anionentauscher mit einer starken Hydroxidbase, z.B. einer Natriumhydroxid-Lösung behandelt, um die Halogenid-Ionen gegen Hydroxid-Ionen auszutauschen. In einem zweiten Schritt wird der mit Hydroxid-Ionen beladene Anionentauscher mit einer Carbonsäure wie Essigsäure umgesetzt, um die Hydroxid-Ionen gegen Carboxylat-Ionen wie Acetat-Ionen auszutauschen.

Überraschenderweise wurde nun festgestellt, dass die Regenerierung in einem einstufigen Verfahren erfolgen kann, wenn als Regenerierungsmittel konzentrierte Lösungen von Metall-Carboxylaten, verwendet werden. Dies ist besonders Vorteilhaft, da Metall-Carboxylate deutlich preiswerter als die entsprechenden Carbonsäuren (z.B. Essigsäure) und Metall-Basen (z.B. Natriumhydroxid) ist. Zudem sind Metall-Carboxylate im Gegensatz zu den entsprechenden Carbonsäuren und Metallbasen typischerweise keine Gefahrstoffe, was die Handhabung zusätzlich vereinfacht. Ferner wird ein Verfahrensschritt bei der Regenerierung des Anionentauschers gespart, was aus prozessökonomischer Sicht vorteilhaft ist.

Daher wird als Regenerierungsmittel R-Carb vorteilhafterweise ein Metall-Carboxylat verwendet, wobei dieses als Lösung, bevorzugt als wässrige Lösung, umfassend 20 bis 40 Gew.-%, bevorzugt 23 bis 38 Gew.-%, mehr bevorzugt 28 bis 33 Gew.-%, bezogen auf das Gewicht der Lösung, an Metall-Carboxylat, bevorzugt Alkalimetall-Carboxylat, mehr bevorzugt Natriumacetat, eingesetzt wird.

Ein solches Regenerierungsmittel kann beispielsweise hergestellt werden durch Auflösen von 20 bis 40 Gew.-Teilen, bevorzugt 23 bis 38 Gew.-Teilen, mehr bevorzugt 28 bis 33 Gew.-Teilen des lösungsmittelfreien Metall-Carboxylats in 60 bis 80 Gew.-Teilen, bevorzugt 62 bis 77 Gew.-Teilen, mehr bevorzugt 67 bis 72 Gew.-Teilen Lösungsmittel, insbesondere Wasser.

Alternativ kann eine entsprechend größere Menge eines Lösungsmittel-Komplexes des Metall-Carboxylats in einer ensprechend kleineren Menge des Lösungsmittels aufgelöst werden. Beispielsweise kann Natriumacetat in Form einer wässrigen Lösung umfassend 20 bis 40 Gew.-%, bevorzugt 23 bis 38 Gew.-%, mehr bevorzugt 28 bis 33 Gew.-%, Natriumacetat hergestellt werden, indem 20 bis 40 Gew.-Teile, bevorzugt 23 bis 38 Gew.-Teile, mehr bevorzugt 28 bis 33 Gew.-Teile Natriumacetat in 60 bis 80 Gew.-Teilen, bevorzugt 62 bis 77 Gew.-Teilen, mehr bevorzugt 67 bis 72 Gew.-Teilen Wasser aufgelöst werden, oder indem 33 bis 66 Gew.-Teile, bevorzugt 38 bis 63 Gew.-Teile, mehr bevorzugt 46 bis 55 Gew.-Teile Natriumacetat-Trihydrat in 34 bis 67 Gew.-Teilen, bevorzugt 37 bis 62 Gew.-Teilen, mehr bevorzugt 45 bis 54 Gew.-Teilen Wasser aufgelöst werden.

Das Halogenidsalz R-Halo, welches bei der Regenerierung des Anionentauschers entsteht, ist ein Salz des Kations des verwendeten Regenerierungsmittels, und des Halogenid-Anions, mit dem der Anionentauscher T vor der Regenerierung beladen war. Beispielsweise ist das Halogenidsalz R-Halo bei Regenerierung eines mit Chlorid-Ionen beladenen Anionentauschers T mit Natriumacetat ein Natriumchlorid. Das Halogenidsalz R-Halo tritt typischerweise als Zusammensetzung Z2 enthaltend das Halogenidsalz R-Halo, nicht-umgesetztes Regenerierungsmittel R-Carb und Fluid F aus dem Ionentausch-Gefäß.

Das Fluid F, das verwendet wird, um die Ammonium-Halogenid-Verbindung A-Halo durch das Ionentauschgefäß zu drücken, kann ein beliebiges Fluid sein, welches zu diesem Zweck geeignet ist. Bevorzugt ist das Fluid F eine Flüssigkeit, mehr bevorzugt ein Lösungsmittel, welches die Ammonium-Halogenid-Verbindung A-Halo, die Ammonium-Carboxylat-Verbindung A-Carb, das Regenerierungsmittel R-Carb und das Halogenidsalz R-Halo von dem Anionentauscher spülen kann. Mehr bevorzugt ist das Fluid F entionisiertes Wasser.

Das für das erfindungsgemäße Verfahren verwendete Ionentausch-Gefäß kann ein beliebiges Gefäß sein, das für den Ionentausch geeignet ist, und welches mindestens eine erste Öffnung und mindestens eine zweite Öffnung aufweist, durch die Komponenten in das Ionentausch-Gefäß gelangen können und aus diesem austreten können. Hierbei ist vorgesehen, dass der Anionentauscher T während der Durchführung des Verfahrens nicht aus dem Ionentausch-Gefäß austreten kann.

Demnach ist vorgesehen, dass das Ionentausch-Gefäß Mittel aufweist, die ein Austreten des Anionentauschers T verhindern. Beispielsweise können die Öffnungen des Ionentausch-Gefäßes Filtrationsmittel wie Fritten aufweisen, die eine Porengröße haben, die kleiner ist als die Korngröße des Anionentauschers T.

Bevorzugt ist die erste Öffnung auf einer gegenüberliegenden Seite zu der zweiten Öffnung positioniert, sodass ein durch das Ionentausch-Gefäß geleitetes Fluid im Wesentlichen das gesamte Ionentausch-Gefäß durchfließen kann. Mehr bevorzugt ist das Ionentausch-Gefäß ein Rohr wobei die erste Öffnung an einem Ende des Rohrs, und die zweite Öffnung an dem anderen Ende des Rohrs positioniert ist. Mehr bevorzugt ist das Ionentausch-Gefäß eine Säule, wobei die erste Öffnung an dem oberen Ende und die zweite Öffnung an dem unteren Ende positioniert ist.

"Rohr" in dem Kontext der Erfindung ist ein Gefäß mit parallel verlaufenden Seitenwänden (z.B. Mantelfläche eines Zylinders) und Öffnungen an beiden Enden der Seitenwände (z.B. Grundfläche eines Zylinders). Bevorzugt hat ein Rohr im Wesentlichen einen runden Querschnitt (zylindrische Form). "Säule" in dem Kontext der Erfindung ist ein vertikales Rohr.

Die Länge des Ionentausch-Gefäßes im Kontext der Erfindung ist der Abstand d zwischen der ersten Öffnung und der zweiten Öffnung. Der Durchmesser des Ionentausch-Gefäßes im Kontext der Erfindung ist der Abstand der Wände des Ionentausch-Gefäßes an der breitesten Stelle senkrecht zur Längenachse.

Das Verhältnis der Länge des Ionentausch-Gefäßes zum Durchmesser des Ionentausch-Gefäßes ist bevorzugt im Bereich von 2:1 bis 20:1, mehr bevorzugt im Bereich von 2,5:1 bis 10:1, mehr bevorzugt im Bereich von 3:1 bis 5:1, mehr bevorzugt im Bereich von 3,5:1 bis 4:1, mehr bevorzugt im Bereich von 3,6:1 bis 3,8:1.

Beispielsweise kann die Länge des Ionentausch-Gefäßes im Bereich von 50 cm bis 300 cm, bevorzugt im Bereich von 75 cm bis 250 cm, mehr bevorzugt im Bereich von 100 cm bis 200 cm, mehr bevorzugt im Bereich von 125 cm bis 150 cm liegen. Ferner kann der Durchmesser des Ionentausch-Gefäßes beispielsweise im Bereich von 3 cm bis 100 cm, bevorzugt im Bereich von 5 cm bis 80 cm, mehr bevorzugt im Bereich von 10 cm bis 60 cm, mehr bevorzugt im Bereich von 15 cm bis 50 cm, mehr bevorzugt im Bereich von 20 cm bis 45 cm, mehr bevorzugt im Bereich von 30 cm bis 40 cm liegen.

Ein solches Ionentausch-Gefäß ist bevorzugt zu mindestens 80 Vol.-%, bevorzugt zu mindestens 90 Vol.-% mit dem Anionentauscher T gefüllt. Dies kann beispielsweise einer Menge im Bereich von 0,6 kg bis 1 kg, oftmals im Bereich von 0,7 kg bis 0,9 kg, bevorzugt im Bereich von 0,75 kg bis 0,85 kg, mehr bevorzugt im Bereich von 0,82 kg bis 0,84 kg des Anionentauschers T pro Liter des internen Volumens des Ionentausch-Gefäßes entsprechen.

Die Sequenz der Schritte a) und b) in dem erfindungsgemäßen Verfahren kann mit Schritt a) oder Schritt b) beginnen, abhängig davon, ob der Anionentauscher T zu Beginn des Verfahrens mit Carboxylat-Ionen beladen ist oder nicht. Wenn der Anionentauscher T nicht mit Carboxylat-Ionen beladen ist, beginnt die Sequenz der Schritte a) und b) mit Schritt b). Dies ist beispielsweise auch dann der Fall, wenn der Anionentauscher T frisch erworben wurde, da dieser üblicherweise mit Chlorid-Ionen als Gegenionen geliefert wird. Die Sequenz kann beispielsweise mit Schritt a) beginnen, wenn der Anionentauscher T nach der Regenerierung mit Carboxylat-Ionen aus einem früheren Verfahren noch mit Carboxylat-Ionen beladen ist.

Ferner wird die Sequenz der Schritte a) und b) wiederholt durchgeführt, d.h. nach Schritt a) wird Schritt b) durchgeführt, und nach Schritt b) wird Schritt a) durchgeführt. Die Sequenz wird typischerweise beliebig oft wiederholt, beispielsweise bis eine gewünschte Menge an quaternärer Ammonium-Carboxylat-Verbindung A-Carb hergestellt wurde, die quaternäre Ammonium-Halogenid-Verbindung A-Halo erschöpft ist, oder die Vorrichtung, in der das Verfahren durchgeführt wird, gewartet werden muss. Das Wiederholen der Sequenz kann zu einem späteren Zeitpunkt wieder fortgesetzt werden.

In Schritt a) wird die quaternäre Ammonium-Halogenid-Verbindung A-Halo durch das Ionentausch-Gefäß enthaltend den mit Carboxylat-Ionen beladenen Anionentauscher T durchgeleitet, um die quaternäre Ammonium-Halogenid-Verbindung A-Halo zumindest teilweise in die quaternäre Ammonium-Carboxylat-Verbindung A-Carb umzusalzen.

Hierdurch entsteht eine Zusammensetzung Z1, umfassend die Ammonium-Carboxylat-Verbindung A-Carb, gegebenenfalls nicht-umgesetzte Ammonium-Halogenid-Verbindung A-Halo, sowie gegebenenfalls weitere Komponenten, die zusammen mit der Ammonium-Halogenid-Verbindung A-Halo in das Ionentausch-Gefäß eingeführt wurden oder aus solchen entstanden sind. Beispielsweise umfasst die Zusammensetzung Z1 üblicherweise auch Lösungsmittel, wenn die Ammonium-Halogenid-Verbindung A-Halo in Form einer Lösung in die erste Öffnung des Ionentausch-Gefäßes eingeführt wurde. Des Weiteren wird die Ammonium-Halogenid-Verbindung A-Halo durch Einführen mindestens eines anderen Fluids F durch das Ionentausch-Gefäß gedrückt, welches üblicherweise eine andere Fließgeschwindigkeit durch das Ionentausch-Gefäß hat als die Ammonium-Halogenid-Verbindung A-Halo und die Ammonium-Carboxylat-Verbindung A-Carb, sodass eine Vermischung mit dem Fluid F nicht vermieden werden kann. Daher umfasst die Zusammensetzung Z1 meist auch Fluid F.

In der Zusammensetzung Z1 sind typischerweise mindestens 50 Mol-%, oftmals 75 bis 99 Mol-%, bevorzugt 85 bis 98 Mol-% der Halogenid-Ionen der Ammonium-Halogenid-Verbindung A-Halo gegen Carboxylat-Ionen ausgetauscht. Der Austausch von mehr als 95 Mol-% ist möglich, indem die Menge an Ammonium-Halogenid-Verbindung A-Halo, die in das Ionentausch-Gefäß eingeführt wird, klein gewählt wird, wohingegen die Menge des Regenerierungsmittels R-Carb groß gewählt wird.

Diese Bereiche können beispielsweise in der Elektronik- oder Halbleiterindustrie erforderlich sein.

Überraschend wurde jedoch festgestellt, dass für die dauerhafte Vermeidung von Korrosion bei der Verwendung der quaternären Ammonium-Verbindungen als Additiv in Kühlschmierstoff-Emulsionen es ausreicht, wenn 90 bis 95 Mol.-% der Halogenid-Ionen gegen Carboxylat-Ionen ausgetauscht sind. Daher sind in der Zusammensetzung Z1 besonders bevorzugt 90 bis 95 Mol.-%, mehr bevorzugt 90 bis 92 Mol.-% der Halogenid-Ionen der Ammonium-Halogenid-Verbindung A-Halo gegen Carboxylat-Ionen ausgetauscht. Hierdurch wird eine Ausgewogenheit zwischen der dauerhaften Vermeidung von Korrosion und der Prozessökonomie erzielt.

Im Falle von quaternären Ammonium-Verbindungen mit einer Ammonium-Gruppe pro Molekül bedeutet dies, dass die Zusammensetzung Z1 typischerweise mindestens 50 Mol-%, oftmals 75 bis 99 Mol-%, bevorzugt 85 bis 98 Mol-%, mehr bevorzugt 90 bis 95 Mol-%, mehr bevorzugt 90 bis 92 Mol-%, bezogen auf die Menge der quaternären Ammonium-Verbindungen A-Carb und A-Halo, an quaternärer Ammonium-Carboxylat-Verbindung A-Carb und höchstens 50 Mol-%, oftmals 1 bis 25 Mol-%, bevorzugt 2 bis 15 Mol-%, mehr bevorzugt 5 bis 10 Mol-%, mehr bevorzugt 8 bis 10 Mol-%, bezogen auf die Menge der quaternären Ammonium-Verbindungen A-Carb und A-Halo, an quaternärer Ammonium-Halogenid-Verbindung A-Halo enthält.

Bei polymeren quaternären Ammonium-Verbindungen bedeutet dies, dass in den meisten Molekülen ein teilweiser Austausch der Ionen stattgefunden hat, und im Zahlenmittel mindestens 50 Mol-%, oftmals 75 bis 99 Mol-%, bevorzugt 85 bis 98 Mol-%, mehr bevorzugt 90 bis 95 Mol-%, mehr bevorzugt 90 bis 92 Mol-% der Gegenionen Carboxylat-Ionen sind und höchstens 50 Mol-%, oftmals 1 bis 25 Mol-%, bevorzugt 2 bis 15 Mol-%, mehr bevorzugt 5 bis 10 Mol-%, mehr bevorzugt 8 bis 10 Mol-% der Gegenionen Halogenid-Ionen sind.

Der Anteil an Halogenid-Ionen in den quaternären Ammonium-Verbindungen und in der Zusammensetzung Z1 kann beispielsweise mittels Röntgenfluoreszenzanalyse ermittelt werden.

In Schritt b) wird das Carboxylat-enthaltende Regenerierungsmittel R-Carb durch das Ionentausch-Gefäß durchgeleitet, um den mit Halogenid-Ionen beladenen Anionentauscher T zumindest teilweise mit Carboxylat-Ionen zu beladen, und das Carboxylat enthaltende Regenerierungsmittel R-Carb in eine Zusammensetzung Z2 umfassend ein Halogenidsalz R-Halo umzuwandeln. Die Zusammensetzung Z2 kann anschließend für andere Zwecke gesammelt werden oder fachgerecht entsorgt werden. Neben dem Halogenidsalz R-Halo umfasst die Zusammensetzung Z2 meist nicht-umgesetztes Regenerierungsmittel R-Carb sowie gegebenenfalls weitere Komponenten, die zusammen mit dem Regenerierungsmittel R-Carb in das Ionentausch-Gefäß eingeführt wurden oder aus diesem entstanden sind. Beispielsweise umfasst die Zusammensetzung Z2 üblicherweise auch Lösungsmittel, wenn das Regenerierungsmittel R-Carb in Form einer Lösung verwendet wurde.

Des Weiteren wird das Regenerierungsmittel R-Carb durch Einführen mindestens eines anderen Fluids F durch das Ionentausch-Gefäß gedrückt, welches üblicherweise eine andere Fließgeschwindigkeit durch das Ionentausch-Gefäß hat als das Regenerierungsmittel R-Carb und das Halogenidsalz R-Halo, sodass eine Vermischung mit dem Fluid F nicht vermieden werden kann. Daher umfasst die Zusammensetzung Z2 meist auch Fluid F.

Um einen dauerhaften Ionenaustausch in den angegebenen Bereichen zu erzielen ist es vorteilhaft, wenn das Gewichtsverhältnis von in Schritt b) durchgeleitetem Regenerierungsmittel R-Carb zu in Schritt a) durchgeleiteter quaternärer Ammonium-Halogenid-Verbindung A-Halo im Bereich von 1,5:1 bis 20:1, bevorzugt 2:1 bis 15:1, mehr bevorzugt 2,5:1 bis 10:1, mehr bevorzugt 3:1 bis 7:1 liegt. Hierdurch kann über die Dauer des Verfahrens im Schritt b) im Wesentlichen die gleiche Menge an mit Carboxylat-Ionen beladenem Anionentauscher T regeneriert werden, wie in Schritt a) verbraucht wird.

Um die Ammonium-Halogenid-Verbindung A-Halo in Schritt a) durch das Ionentausch-Gefäß zu drücken und einem Anionentausch zu unterziehen wird erfindungsgemäß bevorzugt in einem Schritt a1) eine festgelegte Menge M1 der quaternären Ammonium-Halogenid-Verbindung A-Halo in das Ionentausch-Gefäß durch die erste Öffnung eingeführt. Ferner wird in einem Schritt a2) bevorzugt eine festgelegte Menge M2 des Fluids F ebenfalls durch die erste Öffnung in das Ionentausch-Gefäß eingeführt.

Das eingeführte Fluid F verdrängt die quaternäre Ammonium-Halogenid-Verbindung A-Halo in Richtung der zweiten Öffnung und anschließend in Form der Zusammensetzung Z1 aus der zweiten Öffnung hinaus.

In einem Schritt a3) wird bevorzugt die aus der zweiten Öffnung austretende Zusammensetzung Z1 in einem Sammelgefäß gesammelt, wobei das Sammeln zu einem Zeitpunkt t1 initiiert wird und zu einem Zeitpunkt t2 beendet wird.

Um den Anionentauscher T in Schritt b) wieder mit Carboxylat-Ionen zu beladen, wird erfindungsgemäß bevorzugt in einem Schritt b1) eine festgelegte Menge M3 des Regenerierungsmittels R-Carb in das Ionentausch-Gefäß eingeführt. Das Einführen kann durch die erste Öffnung oder durch die zweite Öffnung des Ionentausch-Gefäßes erfolgen.

Es kann vorteilhaft sein, das Regenerierungsmittel durch die zweite Öffnung einzuführen, da hierdurch der Anionentauscher T an der Stelle, die als letztes mit der quaternären Ammonium-Halogenid-Verbindung A-Halo wechselwirkt, mit der höchsten Konzentration des Regenerierungsmittels R-Carb in Kontakt kommt. Dies kann dazu beitragen, den Grad der Umsetzung zu verbessern, da die Restmengen an nicht umgesetzter Ammonium-Halogenid-Verbindung A-Halo in der Zusammensetzung Z1 am Ende des Ionentausch-Gefäßes mit einer besonders hohen Konzentration an mit Carboxylat-Ionen beladenem Ionentauscher in Kontakt kommen. Des Weiteren ist bei Säulen der Vorteil gegeben, dass der Anionentauscher T, der meist eine niedrigere Dichte hat als das Regenerierungsmittel R-Carb, eine geringere Tendenz hat, auf diesem aufzuschwimmen und verwirbelt zu werden, wenn das Regenerierungsmittel R-Carb von unten nach oben geführt wird.

Das Einführen des Regenerierungsmittels R-Carb durch die erste Öffnung kann hingegen vorteilhaft sein, da hierdurch gewährleistet werden kann, dass sämtliche Komponenten in dieselbe Richtung durch das Ionentausch-Gefäß geführt werden. Dies kann die Prozessökonomie verbessern, da beispielsweise nicht gewartet werden muss, bis die Zusammensetzung Z1 vollständig aus dem Ionentausch-Gefäß ausgetreten ist, bevor das Regenerierungsmittel R-Carb eingeführt wird. Hierdurch kann auch die für das Verfahren erforderliche Menge an Fluid F reduziert werden.

Ferner werden bei dieser Variante keine zusätzlichen Mittel zur Beförderung von Komponenten von der zweiten Öffnung zu der ersten Öffnung gebraucht.

Bevorzugt wird in einem Schritt b2) eine festgelegte Menge M4 des Fluids F in das Ionentausch-Gefäß eingeführt. Das einführen kann ebenfalls durch die erste Öffnung oder durch die zweite Öffnung des Ionentausch-Gefäßes erfolgen. Das Einführen durch die zweite Öffnung kann hierbei sinnvoll sein, wenn zuvor das Regenerierungsmittel R-Carb durch die zweite Öffnung eingeführt wurde, da hierdurch die Reste des Regenerierungsmittels R-Carb durch die erste Öffnung vollständig aus dem Ionentausch-Gefäß gedrückt werden können. Bevorzugt erfolgt das Einführen des Fluids F in Schritt b2) jedoch durch die erste Öffnung des Ionentausch-Gefäßes, unabhängig davon, durch welche Öffnung das Regenerierungsmittel R-Carb eingeführt wurde.

Bevorzugt wird in eine, Schritt b3) die Zusammensetzung Z2 umfassend das Halogenidsalz R-Halo, Regenerierungsmittel R-Carb und das Fluid F welches aus der ersten Öffnung oder aus der zweiten Öffnung austreten, in einem anderen Gefäß als dem Sammelgefäß gesammelt oder entsorgt, wobei das Sammeln oder entsorgen in Schritt b3) zum Zeitpunkt t2 initiiert wird und zum Zeitpunkt t1 der nachfolgenden Wiederholung der Sequenz der Schritte a) und b) beendet wird.

Hierbei ist die festgelegte Menge M1 die Menge der quaternären Ammonium-Halogenid-Verbindung A-Halo, die bei der im Ionentausch-Gefäß an mit Carboxylationen beladenem Anionentauscher T einem Austausch von mindestens 50 Mol-%, bevorzugt 75 bis 99 Mol-%, mehr bevorzugt 85 bis 98 Mol-%, mehr bevorzugt 90 bis 95 Mol-%, mehr bevorzugt 90 bis 92 Mol-% unterzogen werden kann.

Die Menge M1 kann beispielsweise für die im Ionentausch-Gefäß vorhandene Menge des Anionentauschers T vor Beginn des erfindungsgemäßen Verfahrens ermittelt werden. Dies kann beispielsweise dadurch erfolgen, dass die quaternäre Ammonium-Halogenid-Verbindung A-Halo in kleinen, gleichen Portionen in das Ionentausch-Gefäß eingeführt wird und jede Portion mit dem Fluid F vollständig durch das Ionentausch-Gefäß gedrückt wird und jede Portion der austretenden Zusammensetzung in einem getrennten Gefäß gesammelt wird. Für jede Portion kann die Menge der gegen Carboxylat-Ionen ausgetauschten Chlorid-Ionen bestimmt werden.

Die Summe der (chronologisch) ersten gesammelten Portionen, bei denen im Durchschnitt mindestens 50 Mol-%, bevorzugt 75 bis 99 Mol-%, mehr bevorzugt 85 bis 98 Mol-%, mehr bevorzugt 90 bis 95 Mol-%, mehr bevorzugt 90 bis 92 Mol-% der Anionen Carboxylat-Ionen sind, entspricht dann der Menge M1.

Die festgelegte Menge M2 ist die Menge des Fluids F, die ausreichend ist, um die quaternäre Ammonium-Halogenid-Verbindung A-Halo und die Zusammensetzung Z1 enthaltend die quaternäre Ammonium-Carboxylat-Verbundung A-Carb entlang des Abstands d zwischen der ersten Öffnung und der zweiten Öffnung in Richtung der zweiten Öffnung so weit zu drücken, dass eine Vermischug mit dem nachfolgend eingeführten Regenerierungsmittel R-Carb im Wesentlichen verhindert wird.

"Im Wesentlichen verhindert" bedeutet in dem vorliegenden Kontext, dass die aus dem Ionentausch-Gefäß austretende Zusammensetzung Z1 nicht mehr als 5 Gew.-%, bevorzugt nicht mehr als 2 Gew.-%, mehr bevorzugt nicht mehr als 1 Gew.-%, bezogen auf das Gewicht der Zusammensetzung Z1, an Regenerierungsmittel R-Carb und Halogenidsalz R-Halo enthält, und dass die aus dem Ionentausch-Gefäß austretende Zusammensetzung Z2 nicht mehr als 5 Gew.-%, bevorzugt nicht mehr als 2 Gew.-%, bevorzugt nicht mehr als 1 Gew.-%, bezogen auf das Gewicht der Zusammensetzung Z2, an quaternärer Ammonium-Halogenid-Verbindung A-Halo und an quaternärer Ammonium-Carboxylat-Verbindung A-Carb enthält.

Die Menge M2 kann ebenfalls vor Beginn des erfindungsgemäßen Verfahrens ermittelt werden. Beispielsweise kann zunächst das Ionentausch-Gefäß enthaltend den mit Carboxylat-Ionen beladenen Anionentauscher T zunächst mit Fluid F durchspült werden, um Reste anderer Verbindungen zu entfernen. Anschließend wird hierbei die gesamte Menge M1 an quaternärer Ammonium-Halogenid-Verbindung A-Halo, wie oben ermittelt, durch die erste Öffnung in das Ionentausch-Gefäß eingeführt. Danach wird das Fluid F in die erste Öffnung eingeführt, um die quaternäre Ammonium-Halogenid-Verbindung A-Halo durch das Ionentausch-Gefäß zu drücken. Die austretenden Komponenten werden in kleinen, gleichen Portionen in getrennten Gefäßen gesammelt, wobei jeder gesammelten Portion die kumulierte Menge des Fluids F zugeordnet wird, die seit Beginn des Einführens des Fluids F in die erste Öffnung des Ionentausch-Gefäßes eingeführt wurde. Die Menge der in jeder Portion enthaltenen quaternären Ammonium-Verbindungen A-Carb und A-Halo wird bestimmt.

Die eingeführte Menge des Fluids F wird für die Portion notiert, in der quaternäre Ammonium-Verbindungen A-Carb oder A-Halo erstmals detektiert werden, und für die Portion, in der keine quaternären Ammonium-Verbindungen A-Carb und A-Halo mehr detektiert werden. Die Menge M2 entspricht der Differenz dieser beiden Mengen.

Anstelle des Sammelns kleiner Portionen und des Bestimmens der Menge an Ammonium-Verbindungen ist es auch möglich, einen oder mehrere Parameter der austretenden Komponenten kontinuierlich zu messen, wobei die Parameter für das Fluid F und für Zusammensetzungen enthaltend die quaternären Ammonium-Verbindungen sich unterscheiden. In diesem Fall werden die Mengen des Fluids F notiert, die bis zum Beginn einer ersten Veränderung dieser Parameter (steigende Konzentration der quaternären Ammonium-Verbindungen), und die bis zum Ende einer zweiten Veränderung dieser Parameter (sinkende Konzentration der quaternären Ammonium-Verbindungen) in die erste Öffnung eingeführt wurden. Die Menge M2 entspricht der Differenz dieser beiden Mengen. Die Parameter können beispielsweise ausgewählt sein aus dem Brechungsindex, dem pH-Wert, oder der Leitfähigkeit.

Alternativ kann die Menge M2 die Menge an Fluid F sein, die erforderlich ist, die gesamte Menge M1 der Ammonium-Halogenid-Verbindung A-Halo aus dem Ionentausch-Gefäß zu drücken. Diese Alternative ist besonders sinnvoll, wenn das Regenerierungsmittel durch die zweite Öffnung des Ionentausch-Gefäßes, d.h. in entgegengesetzter Richtung zur Ammonium-Halogenid-Verbindung A-Halo eingeführt wird.

Die festgelegte Menge M3 kann ebenfalls ist die Menge des Regenerierungsmittels R-Carb, die erforderlich ist, um den Anionentauscher T mit Carboxylat-Ionen zu beladen, sodass die Menge M1 der quaternären Ammonium-Halogenid-Verbindung A-Halo einem Austausch von mindestens 50 Mol-%, bevorzugt 75 bis 99 Mol-%, mehr bevorzugt 85 bis 98 Mol-%, mehr bevorzugt 90 bis 95 Mol-%, mehr bevorzugt 90 bis 92 Mol-% der Halogenid-Ionen gegen Carboxylat-Ionen unterzogen werden kann. Diese Menge ist typischerweise derart gewählt, dass das Gewichtsverhältnis M3:M1 im Bereich von 1,5:1 bis 20:1, bevorzugt 2:1 bis 15:1, mehr bevorzugt 2,5:1 bis 10:1, mehr bevorzugt 3:1 bis 7:1 liegt.

Die festgelegte Menge M4 ist die Menge des Fluids F, die erforderlich ist, um das Regenerierungsmittel R-Carb und die Zusammensetzung Z2 umfassend das Halogenidsalz R-Halo entlang des Abstands d durch das Ionentausch-Gefäß (101) so weit zu drücken, dass eine Vermischung mit der nachfolgend eingeführten Ammonium-Halogenid-Verbindung A-Halo im Wesentlichen verhindert wird. Die Menge M4 kann auf gleiche Weise bestimmt werden wie die Menge M2, wobei anstelle der Menge M1 der quaternären Ammonium-Halogenid-Verbindung A-Halo due Menge M3 des Regenerierungsmittels R-Carb eingesetzt wird.

Der Zeitpunkt t1, zu dem das Sammeln der Zusammensetzung Z1 in einem Sammelgefäß initiiert wird und das Sammeln oder Entsorgen der Zusammensetzung Z2, des Regenerierungsmittels R-Carb, und des Fluids F beendet wird, ist der Zeitpunkt, zu dem die Zusammensetzung Z1 enthaltend die quaternäre Ammonium-Carboxylat-Verbindung A-Carb beginnt, aus der zweiten Öffnung auszutreten. Der Zeitpunkt t2, zu dem das Sammeln der Zusammensetzung Z1 in einem Sammelgefäß beendet wird und das Sammeln oder Entsorgen der Zusammensetzung Z2, umfassend das Halogenidsalz R-Halo, nicht umgesetztes Regenerierungsmittel R-Carb, und das Fluids F initiiert wird, ist der Zeitpunkt, zu dem die Zusammensetzung Z1 enthaltend die quaternäre Ammonium-Carboxylat-Verbindung A-Carb aufhört, aus der zweiten Öffnung auszutreten.

Beide Zeitpunkte können beispielsweise vor Beginn des Verfahrens ermittelt werden, indem mehrere, zum Beispiel drei, Wiederholungen der Schritte a1), a2), b1) und b2) durchgeführt werden, während die austretenden Komponenten in kleinen, gleichen Portionen in getrennten Gefäßen gesammelt werden, wobei jeder gesammelten Portion die Zeiten seit Beginn des Einführens der einzelnen Komponenten zugeordnet werden.

Die Menge der in jeder Portion enthaltenen quaternären Ammonium-Verbindungen A-Carb wird bestimmt. Der Zeitpunkt des Sammelns der Portionen, in denen die quaternäre Ammonium-Verbindung A-Carb erstmals detektiert wird, entspricht dem Zeitpunkt t1. Der Zeitpunkt des Sammelns der Portionen, in denen in jeder Wiederholung keine quaternäre Ammonium-Verbindung mehr detektiert wird, entspricht dem Zeitpunkt t2. Nach der Durchführung der drei Wiederholungen kann eine Periodizität ermittelt werden, mit der die Zeitpunkte t1 und t2 eintreten, und auf das erfindungsgemäße Verfahren angewandt werden.

Alternativ können die Zeitpunkte bestimmt werden, indem ein oder mehrere Parameter der austretenden Komponenten kontinuierlich gemessen werden, wobei diese Parameter sich für Zusammensetzungen Z1 enthaltend die quaternären Ammonium-Carbonat-Verbindung und für die Zusammensetzung Z2 enthaltend das Halogenidsalz R-Halo unterscheiden. In diesem Fall ist der Zeitpunkt t1 der Zeitpunkt, an dem eine steigende Konzentration der quaternären Ammonium-Carboxylat-Verbindung A-Carb festgestellt wird, und der Zeitpunkt t2 der Zeitpunkt, an dem die gesunkene Konzentration der quaternären Ammonium-Carboxylat-Verbindung A-Carb festgestellt wird. Die Parameter können beispielsweise ausgewählt sein aus dem Brechungsindex, dem pH-Wert, oder der Leitfähigkeit. Bei dieser Alternative kann die Bestimmung der Zeitpunkte t1 und t2 für jede Wiederholung der Sequenz der Schritte a) und b) individuell und automatisiert während des erfindungsgemäßen Verfahrens erfolgen.

Ein weiterer Gegenstand der Erfindung ist eine Vorrichtung umfassend ein Ionentausch-Gefäß mit mindestens einer ersten Öffnung und mindestens einer zweiten Öffnung, die in einem Abstand d zueinander angeordnet sind, und einen Anionentauscher T zwischen der ersten Öffnung und der zweiten Öffnung, der mit Carboxylat-Ionen oder Halogenid-Ionen beladen ist, ein Sammelgefäß zum Sammeln einer Zusammensetzung Z1 umfassend eine quaternäre Ammonium-Carboxylat-Verbindung A-Carb, mindestens ein Mittel zum selektiven Einführen von einer von mindestens drei Komponenten in das Ionentausch-Gefäß, und mindestens ein Mittel zum ein- und ausstellen des Durchflusses von Komponenten aus dem Ionentausch-Gefäß in das Sammelgefäß und optional andere Gefäße, wobei die Vorrichtung eingerichtet ist, das erfindungsgemäße Verfahren, bevorzugt automatisiert auszuführen.

Das mindestens eine Mittel zum selektiven Einführen von einer von mindestens drei Komponenten kann beispielsweise ein Mehrweg-Ventil sein, welches geregelt werden kann, um den Durchfluss einer Komponente ausgewählt aus der quaternären Ammonium-Halogenid-Verbindung A-Halo, dem Fluids F und dem Regenerierungsmittels R-Carb zu erlauben. Ein solches Ventil ist bevorzugt mit einem oder mehreren Durchflussmessern, beispielsweise Oval-Zahnrad-Durchflussmessern oder Turbinen kombiniert, mittels deren die eingeführte Menge der einzelnen Komponenten bestimmt werden kann. Alternativ können einzelne Ventile, beispielsweise Magnetventile für jede der Komponenten verwendet werden. Diese sind vorzugsweise ebenfalls mit einem oder mehreren Durchflussmessern kombiniert.

Ferner können die Mittel volumetrische Pumpen sein, die jeweils eine von mindestens drei Komponenten in das Ionentausch-Gefäß befördern, oder Kombinationen aus regelbaren Pumpen und Durchflussmessern. Auch Kombinationen der genannten Mittel können verwendet werden.

Wenn Ventile als Mittel zum selektiven Einführen von einer von mindestens drei Komponenten verwendet werden, können die quaternäre Ammonium-Halogenid-Verbindung A-Halo, das Fluid F und das Regenerierungsmittel R-Carb beispielsweise aus unter Druck stehenden Quellen entnommen. Solche Quellen können beispielsweise Vorratsgefäße sein, in welche Druckluft eingeführt wird, um die quaternäre Ammonium-Halogenid-Verbindung A-Halo, das Fluid F oder das Regenerierungsmittel R-Carb durch die Ventile zu befördern. Alternativ können solche Quellen beispielsweise Vorratsgefäße sein, die oberhalb des Ionentausch-Gefäßes positioniert sind, sodass die quaternäre Ammonium-Halogenid-Verbindung A-Halo, das Fluid F oder das Regenerierungsmittel R-Carb durch deren hydrostatischen Druck durch die Ventile zu befördern.

Das mindestens eine Mittel zum ein- und ausstellen des Durchflusses von Komponenten aus dem Ionentausch-Gefäß in das Sammelgefäß und optional andere Gefäße kann ein beliebiges Mittel sein, die zu diesem Zweck geeignet.

Beispielsweise kann eine Kombination aus mehreren Ventilen, beispielsweise Magnetventilen verwendet werden, die den Durchfluss in einzelne Richtungen erlauben oder verhindern. Alternativ kann ein mehrweg-Ventil verwendet werden, welches geregelt werden kann, um den Durchfluss in das Sammelgefäß, ein oder mehrere andere Gefäße oder zur Entsorgung zu erlauben.

Des Weiteren kann die erfindungsgemäße Vorrichtung einen oder mehrere Sensoren aufweisen, die mindestens einen Parameter der aus dem Ionentauschgefäß austretenden Komponenten bestimmt. Diese Parameter können beispielsweise ein Brechungsindex, eine Leitfähigkeit oder ein pH-Wert der Komponenten sein. Dementsprechend kann der mindestens einen Sensor beispielsweise ausgewählt sein aus einem Refraktometer, vorzugsweise einem Prozessrefraktometer, einem pH-Meter und einem Leitfähigkeitssensor. Es ist vorgesehen, dass der Sensor so gewählt ist, dass die Ausprägung des bestimmten Parameters sich für die Zusammensetzung Z1 und für andere austretenden Komponenten unterscheidet.

Ferner kann die erfindungsgemäße Vorrichtung eine Steuereinheit umfassen, die das erfindungsgemäße Verfahren steuert und dieses automatisiert ablaufen lassen kann. Die Steuereinheit kann beispielsweise einen Mikroprozessor, einen Mikrocontroller, ein ASIC (anwendungsspezifische integrierte Schaltung), ein FPGA (Field Programmable Gate Array) und/oder einen Computer umfassen. Vorzugsweise ist die Steuereinheit ein Computer.

### Kurze Beschreibung der Figuren

Ausführungsbeispiele der Erfindung und dieser zugrundeliegende Prinzipien sind in den Zeichnungen dargestellt und in der nachfolgenden Beschreibung näher erläutert. Es zeigen:
FIG. 1 eine schematische Darstellung des Austausches von Chlorid-Ionen gegen Acetat-Ionen,
FIG. 2 eine Visualisierung der Beurteilungskriterien für die Bestimmung des Korrosionsverhaltens mit der Spänetest-Methode mit Graugussspänen gemäß DIN 51360-2:1981-07
FIG. 3 eine schematische Darstellung einer Ausführungsform der erfindungsgemäßen Vorrichtung,
FIG. 4 eine schematische Darstellung einer weiteren Ausführungsform der erfindungsgemäßen Vorrichtung,
FIG. 5 eine schematische Darstellung einer dritten Ausführungsform der erfindungsgemäßen Vorrichtung,
FIG. 6 eine schematische Darstellung des Ablaufs einer Ausführungsform des erfindungsgemäßen Verfahrens,
FIG. 7 eine schematische Darstellung des Ablaufs einer weiteren Ausführungsform des erfindungsgemäßen Verfahrens,
FIG. 8 eine schematische Darstellung des Ablaufs einer dritten Ausführungsform des erfindungsgemäßen Verfahrens.

In der nachfolgenden Beschreibung der Ausführungsbeispiele der Erfindung werden gleiche oder ähnliche Komponenten mit gleichen Bezugszeichen bezeichnet, wobei auf eine wiederholte Beschreibung dieser in Einzelfällen verzichtet wird. Die Figuren stellen den Gegenstand der Erfindung nur schematisch dar.

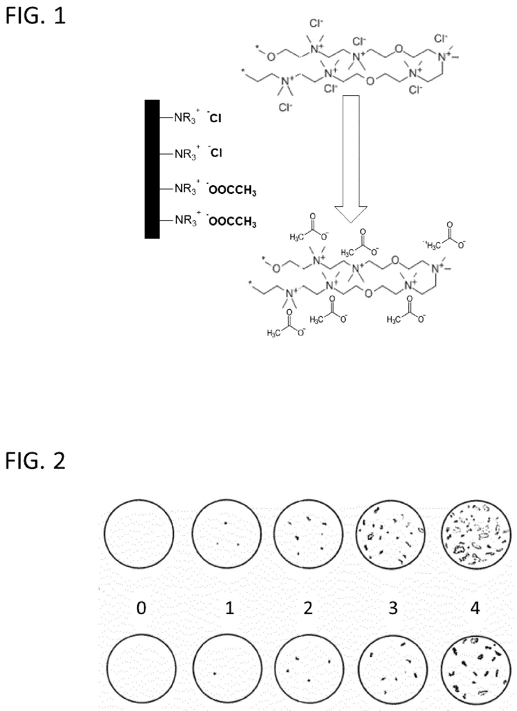

FIG. 1 zeigt eine vereinfachte schematische Darstellung des Austausches von Chlorid-Ionen gegen Acetat-Ionen. In dem vorliegenden Beispiel ist der Anionentauscher T eine stationäre Phase mit daran gebundenen Trialkylammonium-Gruppen, wobei der Anionentauscher T als schwarzer Balken dargestellt ist, und die Trialkylammonium-Gruppen als NR₃⁺ dargestellt sind. R ist Alkyl, bevorzugt Methyl. Der Anionentauscher T ist mit Acetationen beladen und wird im Verlauf der Umsalzung mit Chloridionen beladen. Als quaternäre Ammonium-Halogenid-Verbindung A-Halo ist eine polymere Verbindung P-Halo gezeigt, die Poly[oxyethylen(dimethyliminio)ethylen(dimethyliminio)-ethylendichlorid] ist. Nach dem Umsalzen im Ionentauscher wird als polymere quaternäre Ammonium-Carboxylat-Verbindung P-Carb Poly[oxyethylen-(dimethyliminio)ethylen(dimethyliminio)ethylendiacetat] erhalten.

FIG. 2 zeigt eine Visualisierung der Beurteilungskriterien für die Bestimmung des Korrosionsverhaltens mit der Spänetest-Methode mit Graugussspänen gemäß DIN 51360-2:1981-07. Diese wurde in den Ausführungsbeispielen angewandt, um den Korrosionsgrad zu bestimmen.

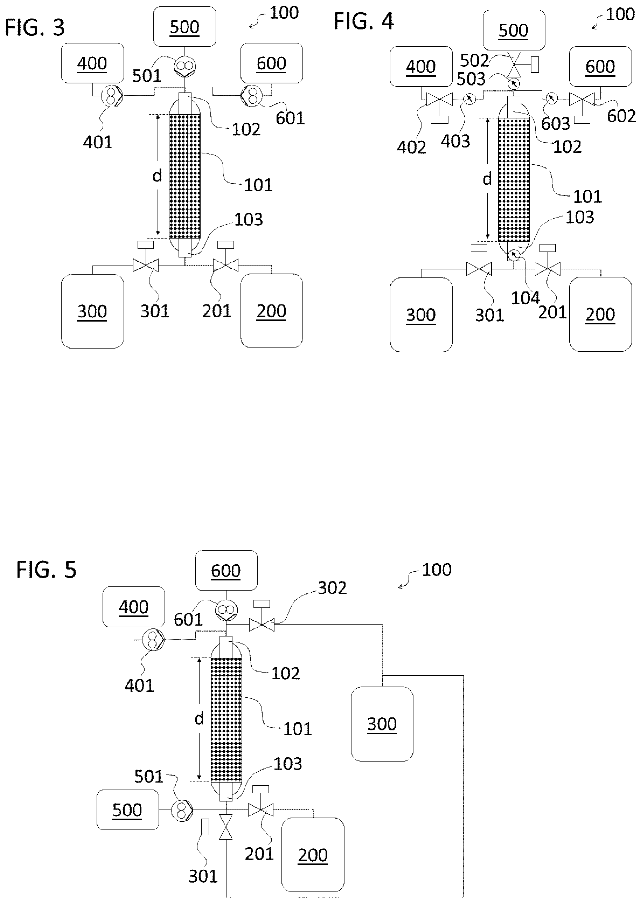

FIG. 3 zeigt eine Ausführungsform der erfindungsgemäßen Vorrichtung 100, umfassend ein Ionentauschgefäß 101, welches mit einem Anionentauscher T gefüllt ist (als Schraffierung dargestellt). Das Ionentauschgefäß 101 ist als Säule ausgebildet, die an dem oberen Ende eine erste Öffnung 102 und an dem unteren Ende eine zweite Öffnung 103 aufweist, die in einem Abstand d zueinander angeordnet sind. Ferner umfasst die Vorrichtung 100 ein Sammelgefäß 200 für die Zusammensetzung Z1, ein weiteres Gefäß 300 für die anderen austretenden Komponenten, ein Magnetventil 201, welches den Durchfluss von der zweiten Öffnung 103 des Ionentausch-Gefäßes 101 in das Sammelgefäß 200 erlauben oder verhindern kann, ein Magnetventil 301, welches den Durchfluss von der zweiten Öffnung 103 des Ionentausch-Gefäßes 101 in das weitere Gefäß 300 erlauben oder verhindern kann. Des Weiteren umfasst die Vorrichtung 100 ein Vorratsgefäß 400, in dem die quaternäre Ammonium-Halogenid-Verbindung A-Halo enthalten ist, ein Vorratsgefäß 500, in dem das Regenerierungsmittel R-Carb enthalten ist, ein Vorratsgefäß 600, in dem das Fluid F enthalten ist, sowie eine volumetrische Pumpe 401, die eine festgelegte Menge M1 der Ammonium-Halogenid-Verbindung A-Halo aus dem Vorratsgefäß 400 in die erste Öffnung 102 des Ionentausch-Gefäßes 101 einführen kann, eine volumetrische Pumpe 501, die eine festgelegte Menge M3 des Regenerierungsmittels R-Carb aus dem Vorratsgefäß 500 in die erste Öffnung 102 des Ionentausch-Gefäßes 101 einführen kann, und eine volumetrische Pumpe 601, die eine festgelegte Menge M2 oder eine festgelegte Menge M4 des Fluids F aus dem Vorratsgefäß 600 in die erste Öffnung 102 des Ionentausch-Gefäßes 101 einführen kann. Eine Steuereinheit (nicht gezeigt) ist eingerichtet, die Ventile 201 und 301 anzusteuern, sodass diese geöffnet oder geschlossen werden, sowie die volumetrischen Pumpen 401, 501 und 601 anzusteuern, sodass diese die jeweiligen Komponenten fördern oder dies unterlassen. Die Steuereinheit ist derart eingerichtet, dass nur eines der Ventile 201 oder 301 zur selben Zeit geöffnet ist, und nur eine der volumetrischen Pumpen 401, 501 oder 601 die jeweilige Komponente fördert. Die Sequenz, in der die Pumpen 401, 501 und 601 die Komponenten fördern und die Mengen der jeweiligen Komponenten werden vorab ermittelt und in die Steuereinheit programmiert. Der Zeitpunkt t1, zu dem Ventil 201 geöffnet und Ventil 301 geschlossen wird, und der Zeitpunkt t2, zu dem Ventil 201 geschlossen und Ventil 301 geöffnet wird, werden ebenfalls vorab ermittelt und in die Steuereinheit programmiert.

FIG. 4 zeigt eine weitere Ausführungsform der erfindungsgemäßen Vorrichtung 100. Diese unterscheidet sich von der Vorrichtung gemäß FIG. 3 dadurch, dass anstelle der volumetrischen Pumpe 401 ein Magnetventil 402 in Kombination mit einem Durchflussmesser 403, anstelle der volumetrischen Pumpe 501 ein Magnetventil 502 mit einem Durchflussmesser 503, und anstelle der volumetrischen Pumpe 601 ein Magnetventil 602 mit einem Durchflussmesser 603 verwendet werden. Die Vorratsgefäße 400, 500 und 600 stehen unter Druck, beispielsweise indem Druckluft in diese eingeführt wird (nicht gezeigt). Ferner umfasst das Ionentausch-Gefäß 101 einen Sensor 104, der mindestens einen Parameter der aus der zweiten Öffnung 103 austretenden Komponenten bestimmen kann. Beispielsweise ist der Sensor 104 ein Leitfähigkeitssensor. Die Steuereinheit (nicht gezeigt) ist eingerichtet, die Ventile 201, 301, 402, 502 und 602 anzusteuern, sodass diese geöffnet oder geschlossen werden. Die Steuereinheit ist derart eingerichtet, dass nur eines der Ventile 201 oder 301 zur selben Zeit geöffnet ist, und nur eines der Ventile 402, 502 oder 602 zur selben Zeit geöffnet wird. Die Sequenz, in der die Ventile 402, 502 und 602 geöffnet und geschlossen werden und die Mengen der jeweiligen Komponenten werden vorab ermittelt und in die Steuereinheit programmiert. Wenn die jeweils festgelegte Menge bei geöffnetem Ventil 402, 502 oder 602 durch den dazugehörigen Durchflussmesser 403, 503 bzw. 603 festgestellt wird, schließt das Ventil. Der Zeitpunkt t1, zu dem Ventil 201 geöffnet und Ventil 301 geschlossen wird, ist der Zeitpunkt, an dem der Sensor 104 einen Anstieg der Leitfähigkeit detektiert, der vorab für die Zusammensetzung Z1 ermittelt wurde. Der Zeitpunkt t2, zu dem Ventil 201 geschlossen und Ventil 301 geöffnet wird, entspricht dem Zeitpunkt, zu dem die Leitfähigkeit wieder gesunken ist.

FIG. 4 zeigt eine weitere Ausführungsform der erfindungsgemäßen Vorrichtung 100. Diese unterscheidet sich von der Vorrichtung gemäß FIG. 3 dadurch, dass die volumetrische Pumpe 501 das Regenerierungsmittel R-Carb aus dem Vorratsgefäß 500 durch die zweite Öffnung 103 des Ionentausch-Gefäßes 101 einführt. Die Vorrichtung 100 umfasst ein weiteres Magnetventil 302, welches den Durchfluss von der ersten Öffnung 102 des Ionentausch-Gefäßes 101 in das weitere Gefäß 300 erlauben oder verhindern kann. Die Steuereinheit (nicht gezeigt) ist eingerichtet, die Ventile 201, 301 und 302 anzusteuern, sodass diese geöffnet oder geschlossen werden, sowie die volumetrischen Pumpen 401, 501 und 601 anzusteuern, sodass diese die jeweiligen Komponenten fördern oder dies unterlassen.

Die Steuereinheit ist derart eingerichtet, dass nur eines der Ventile 201, 301 oder 302 zur selben Zeit geöffnet ist, und nur eine der volumetrischen Pumpen 401, 501 oder 601 die jeweilige Komponente fördert. Wenn die volumetrische Pumpe 501 in Betrieb ist, sind Ventile 201 und 301 immer geschlossen und Ventil 302 offen. Wenn die volumetrische Pumpe 301 oder 601 in Betrieb ist, ist Ventil 302 immer geschlossen und eines der Ventile 201 oder 301 geöffnet. Im Übrigen werden die volumetrischen Pumpen und Ventile 201 und 301 angesteuert, wie für FIG. 3 beschrieben.

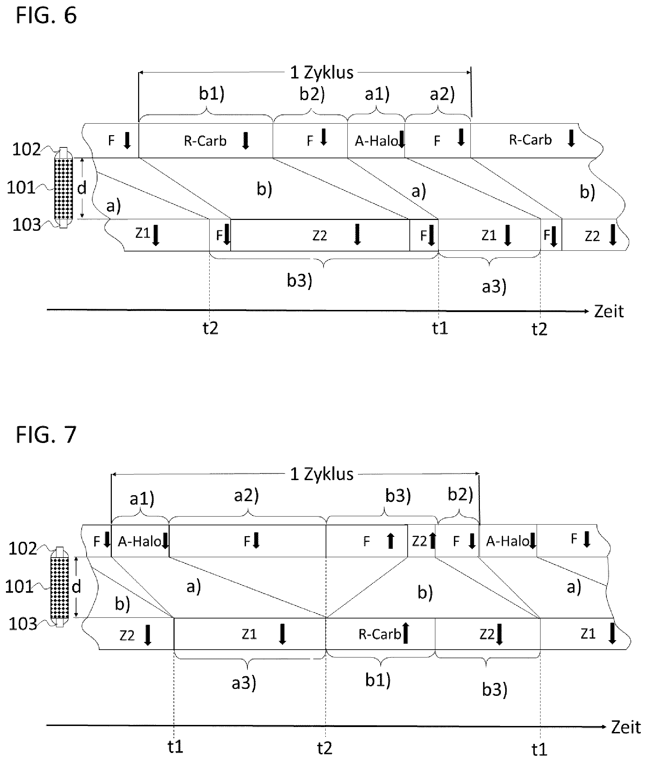

FIG. 6, 7 und 8 zeigen jeweils eine schematische Darstellung des Ablaufs einer Ausführungsform des erfindungsgemäßen Verfahrens. Die Abbildung zeigt einen Ausschnitt aus dem Verfahren, in dem eine Wiederholung (1 Zyklus) der Schritte a) und b) der Verfahrens bzw. der Schritte a1), a2), a3), b1), b2) und b3) eingezeichnet sind. In dieser Darstellung fängt die Sequenz der Schritte a) und b) mit Schritt b) an. Die horizontale Achse stellt die Zeitachse dar, auf der die Zeitpunkte t1 und t2 eingezeichnet sind. Der zeitliche Ablauf des Verfahrens ist in drei Streifen eingeteilt. Der obere Streifen kennzeichnet die Komponenten, die durch die erste Öffnung 102 des Ionentausch-Gefäßes 101 ein und austreten, der untere Streifen kennzeichnet die Komponenten, die durch die zweite Öffnung 103 des Ionentausch-Gefäßes 101 ein und austreten.

Die schwarzen Pfeile kennzeichnen dabei die Richtung, in die die Komponenten bewegt werden. Der mittlere Streifen zeigt den ungefähren zeitlichen Verlauf der Strecke entlang des Abstands d zwischen der ersten Öffnung 102 und der zweiten Öffnung 103 des Ionentausch-Gefäßes 101, die die einzelnen Komponenten innerhalb des Ionentausch-Gefäßes 101 zurücklegen. Da das Fluid F zu einem geringeren Ausmaß mit dem Ionentauscher T wechselwirkt als die anderen Komponenten, ist dessen Fließgeschwindigkeit höher, sodass ein Teil des Fluids F teilweise in den Zusammensetzungen Z1 und Z2 enthalten ist, und somit die austretende Menge der Zusammensetzungen Z1 und Z2 größer ist als die eintretende Menge an quaternärer Ammonium-Halogenid-Verbindung A-Halo bzw. der eintretenden Menge an Regenerierungsmittel R-Carb. Die austretende Menge an Fluid F ist entsprechend kleiner als die eintretende Menge.

Zur Veranschaulichung ist das Ionentausch-Gefäß 101 mit der ersten Öffnung 102 und der zweiten Öffnung 103 neben dem schematischen Ablauf dargestellt.

In FIG.6 ist schematisch der zeitliche Ablauf für ein Verfahren gezeigt, bei dem die quaternäre Ammonium-Halogenid-Verbindung A-Halo, das Fluid F und das Regenerierungsmittel R-Carb durch die erste Öffnung 102 des Ionentausch-Gefäßes 101 eingeführt werden, wie es beispielsweise bei den Vorrichtungen gemäß FIG. 3 und FIG. 4 der Fall ist. Der Austritt der Zusammensetzung Z1 enthaltend die quaternäre Ammonium-Carboxylat-Verbindung A-Carb, des Fluids F oder der Zusammensammensetzung Z2 enthaltend das Halogenidsalz R-Halo aus der zweiten Öffnung 103 findet zeitversetzt zum Einführen der Ammonium-Halogenid-Verbindung A-Halo, des Fluids F bzw. des Regenerierungsmittels R-Carb statt.

Da alle Komponenten durch die erste Öffnung 102 eingeführt werden, muss vor dem Einführen des Regenerierungsmittels R-Carb nicht gewartet werden, bis die gesamte Zusammensetzung Z1 aus der zweiten Öffnung 103 ausgetreten ist und vor dem Einführen der quaternären Ammonium-Halogenid-Verbindung A-Halo nicht gewartet werden, bis die gesamte Zusammensetzung Z2 aus der zweiten Öffnung 103 ausgetreten ist. Es ist ausreichend, wenn das Fluid F einen ausreichenden Abstand zwischen der Zusammensetzung Z1 und dem Regenerierungsmittel R-Carb erzeugt hat, sodass deren Vermischung im Wesentlichen verhindert wird.

In FIG. 7 ist schematisch der zeitliche Ablauf für ein Verfahren gezeigt, bei dem nur das Regenerierungsmittel R-Carb durch die zweite Öffnung 103 in das Ionentauschgefäß 101 eingeführt wird, wie es beispielsweise bei der Vorrichtung gemäß FIG. 5 der Fall ist. Bei dieser Ausführungsform muss gewartet werden, bis die gesamte Zusammensetzung Z1 aus der zweiten Öffnung 103 getreten ist, bevor das Regenerierungsmittel R-Carb in die zweite Öffnung 103 eingeführt wird.

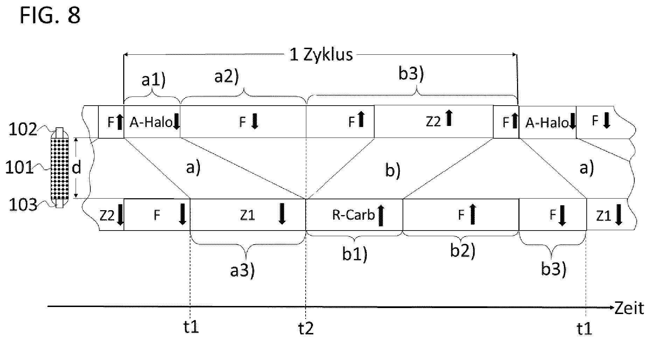

In FIG. 8 ist schematisch der zeitliche Ablauf für ein Verfahren gezeigt, bei dem zusätzlich zu dem Regenerierungsmittel R-Carb auch das Fluid F nach dem Regenerierungsmittel R-Carb durch die zweite Öffnung 103 in das Ionentauschgefäß 101 eingeführt wird. Bei dieser Ausführungsform muss zusätzlich gewartet werden, bis die gesamte Zusammensetzung Z2 aus der ersten Öffnung 102 ausgetreten ist, bevor die quaternäre Ammonium-Halogenid-Verbindung A-Halo in die erste Öffnung 102 eingeführt wird. Um dies sicherzustellen, wird gewartet, bis das Fluid F allein aus der ersten Öffnung 102 austritt.

Die Figuren 1-8, Beispiele und Ansprüche erläutern die Erfindung.

### Beispiele

Als quaternäre Ammonium-Halogenid-Verbindung A-Halo wurde Poly[oxyethylen-(dimethyliminio)ethylen(dimethyliminio)ethylendichlorid] (P-Halo) eingesetzt. Dieses wurde in Form einer 60 Gew.-%igen wässrigen Lösung verwendet. Die wässrige Lösung wurde von Buckman Laboratories International, Inc. als EBC-1 erworben. Der Chloridgehalt beträgt ca. 17 Gew.-%, bezogen auf die wässrige Lösung. Die kinematische Viskosität, gemessen mit dem "SVM 3001 Stabinger Viscosimeter" (Anton Paar) in Anlehnung an DIN EN 16896:2017-02, der wässrigen Lösung bei 20 °C beträgt 483 mm²/s, und bei 40 °C 198 mm²/s. Die Lösung wurde unverdünnt verwendet.

Als Regenerierungsmittel R-Carb wurde eine Lösung von 50 Gew.-Teilen Natriumacetat-Trihydrat in 50 Gew.-Teilen entionisiertem Wasser verwendet.

Als Fluid F wurde entionisiertes Wasser verwendet.

Der Anionentauscher T (LEWATIT^{®} MonoPlus M500) wurde von LANXESS Deutschland GmbH erworben und ist ein vernetztes, gelförmiges Copolymer-Harz aus Styrol und Divinylbenzol, mit daran gebundenen quaternären Ammoniumgruppen. In erworbenem Zustand war der Anionentauscher T mit Chloridionen beladen.

### Beispiel 1

Das Verfahren zur Herstellung von Poly[oxyethylen(dimethyliminio)ethylen-(dimethyliminio)ethylendiacetat] als polymere quaternäre Ammonium-Carboxylat-Verbindung P-Carb wurde mehrfach durchgeführt, um geeignete Verhältnisse von Regenerierungsmittel R-Carb zu polymerer quaternärer Ammonium-Halogenid-Verbindung P-Halo zu ermitteln.

Das Ionentausch-Gefäß war eine Säule mit rundem Querschnitt mit einer Länge von 130 cm und einem Durchmesser von 35 cm. Das Ionentausch-Gefäß war mit 100 kg des Anionentauschers gefüllt.

Es wurde gefunden, dass für einen Austausch von mehr als 90 Mol-% der Chlorid-Ionen Verhältnisse, wie in Tabelle 1 dargestellt, ausreichend waren. Das Verhältnis R-Carb:P-Halo ist das Netto-Gewichtsverhältnis (Natriumacetat:Poly[oxyethylen-(dimethyliminio)ethylen(dimethyliminio)ethylendichlorid]) ohne das enthaltene Wasser. Der Gehalt der Chlorid-Ionen in dem Ausgangsmaterial und der Restgehalt der Chlorid-Ionen im Produkt wurden mittels Röntgenfluoreszenzanalyse ermittelt.

**Tabelle 1**

| Menge Natriumacetat Trihydrat [g] | Menge EBC-1 [g] | Verhältnis R-Carb: P-Halo | Restanteil Chlorid |
|---|---|---|---|
| 120 | 35 | 3,4:1 | 8,9 Mol-% |
| 160 | 35 | 4,6:1 | 2,7 Mol-% |
| 240 | 35 | 6,9:1 | 1,9 Mol-% |

### Beispiel 2

Das Verfahren zur Herstellung von Poly[oxyethylen(dimethyliminio)ethylen-(dimethyliminio)ethylendiacetat] als quaternäre Ammonium-Carboxylat-Verbindung P-Carb wurde mit den Parametern durchgeführt, wie in Tabelle 2 gezeigt, wobei nur das Regenerierungsmittel von unten in das Ionentausch-Gefäß eingeführt wurde und die übrigen Komponenten von oben eingeführt wurden. Da der erworbene Anionentauscher T mit Chlorid-Ionen beladen war, wurde der Regenerierungsschritt b) als erster Schritt des Verfahrens durchgeführt.

Das Ionentausch-Gefäß war eine Säule mit rundem Querschnitt mit einer Länge von 130 cm und einem Durchmesser von 35 cm. Das Ionentausch-Gefäß war mit 100 kg des Anionentauschers gefüllt.

**Tabelle 2**

| Schritt | Zulauf | Auslauf | Komponenten | Volumenstrom Zulauf [L/h] | Zeit [min] | Volumen [L] |
|---|---|---|---|---|---|---|
| b1) | R-Carb | F, dann Z2 | F, R-Carb, R-Halo | 75 | 180 | 225 |
| b2) | F | Z2 | F, R-Carb, R-Halo | 200 | 39 | 130 |
| a1) | P-Halo | Z2, dann F | F, R-Carb, R-Halo | 50 | 12 | 10 |
| a2) | F | F | F | 100 | 9 | 15 |
| | | Z1 | P-Carb, F | | 120 | 200 |

Die Zusammensetzung Z1 enthaltend die polymere Ammonium-Carboxylat-Verbindung P-Carb wurde nur im Auslauf im zweiten Teil des Schritts a2) gemäß Tabelle 2 detektiert und gesammelt. Die übrigen Produkte wurden in einem Abfall-Container gesammelt.

Die isolierte Zusammensetzung Z1 bestand im Wesentlichen aus Poly[oxyethylen-(dimethyliminio)ethylen(dimethyliminio)ethylendiacetat] und Wasser. Im Durchschnitt waren nicht mehr als 10 Mol-% der Anionen Chlorid-Ionen.

Die Konzentration von Poly[oxyethylen(dimethyliminio)ethylen(dimethyliminio)-ethylendiacetat] in der Zusammensetzung Z1 betrug 3 Gew.-%, bezogen auf die Zusammensetzung. Vor der weiteren Verwendung in Kühlschmierstoffen wurde die Zusammensetzung auf eine Konzentration von 60 Gew.-% aufkonzentiert, um eine Vergleichbarkeit mit EBC-1 zu ermöglichen.

Eine Durchführung des Verfahrens, mit der Änderung, dass auch das Regenerierungsmittel R-Carb von oben durch das Ionentausch-Gefäß eingeführt wird, erlaubt eine deutliche Einsparung der Fluidmenge in Schritt b2), ohne dass sich die Eigenschaften des Produkts wesentlich verändern.

### Beispiel 3

Ein Kühlschmierstoff umfassend 0,4 Gew.-% EBC-1 (Nettogehalt P-Halo = 0,24 Gew.-%) als Additiv zur Minderung der Schaumbildungsneigung wurde hergestellt und aus diesem wurden wässrige Kühlschmierstoff-Emulsionen mit Konzentrationen von 5,5 bis 8,5 Gew.-% des Kühlschmierstoffs hergestellt.

Auf gleiche Weise wurde ein Kühlschmierstoff umfassend 0,4 Gew.-% des in Beispiel 2 hergestellten Konzentrats enthaltend 60 Gew.-% Poly[oxyethylen-(dimethyliminio)ethylen(dimethyliminio)ethylendiacetat] (Nettogehalt P-Carb = 0,24 Gew.-%; 10 Mol-% Chlorid bei den Anionen) hergestellt, und aus diesem wurden wässrige Kühlschmierstoff-Emulsionen mit Konzentrationen von 5,5 bis 8,5 Gew.-% des Kühlschmierstoffs hergestellt.

Das Korrosionsverhalten der hergestellten Kühlschmierstoff-Emulsionen wurde vor dem Einsatz in einer Werkzeugmaschine gemäß DIN 51360-2:1981-07 untersucht. Das Korrosionsverhalten wurde mit den Werten 0 bis 4 bewertet, wobei die Bewertungskriterien in FIG. 2 abgebildet sind.

Ferner wurden die Kühl-Schmierstoff-Emulsionen in Werkzeugmaschinen eingesetzt, bei denen regelmäßig frische Kühl-Schmierstoffemulsion nachgefahren werden musste. Bei keiner der Emulsionen wurde Schaumbildung festgestellt. Nachdem insgesamt jeweils eine Menge an frischer Kühl-Schmierstoff-Emulsion nachgefahren wurde, die zu einer 5-fachen Anreicherung an Chlorid-Ionen führte, wurde das Korrosionsverhalten erneut beurteilt.

Die Ergebnisse sind in Tabelle 3 dargestellt.

| Konzentration [Gew-%] | | 5,5 | 6 | 6,5 | 7 | 7,5 | 8 | 8,5 |
|---|---|---|---|---|---|---|---|---|
| | | Beurteilung | | | | | | |
| Synthetischer Kühlschmierstoff mit 0,4 Gew.-% P-Halo | Vor Anreicherung | 2 | 2 | 1 | 1 | 1 | 0 | 0 |
| | Nach Anreicherung | 3 | 3 | 3 | 3 | 2 | 2 | 1 |
| Synthetischer Kühlschmierstoff mit 0,4 Gew.-% P-Carb | Vor Anreicherung | 2 | 2 | 1 | 0 | 0 | 0 | 0 |
| | Nach Anreicherung | 2 | 2 | 1 | 0 | 0 | 0 | 0 |

Aus den Daten ist zu erkennen, dass mit dem erfindungsgemäßen Kühlschmierstoff enthaltend P-Carb bereits vor dem Betrieb der Werkzeugmaschinen ab Konzentrationen von 7 Gew.-% in der Emulsion geringere Korrosionserscheinungen auftreten als mit dem Kühlschmierstoff enthaltend P-Halo.

Nach dem Betrieb der Werkzeugmaschinen und der Anreicherung der Chloridionen ändert sich das Korrosionsverhalten bei den erfindungsgemäßen Kühlschmierstoffen nicht. Bei den Kühlschmierstoffen enthaltend P-Halo treten hingegen deutlich stärkere Korrosionserscheinungen bei allen untersuchten Konzentrationen auf.

## Patentansprüche

1. Verfahren zur Herstellung einer quaternären Ammonium-Carboxylat-Verbindung A-Carb, umfassend die Schritte:
a) Durchleiten einer quaternären Ammonium-Halogenid-Verbindung A-Halo, vorzugsweise einer quaternären Ammonium-Chlorid-Verbindung, durch ein Ionentausch-Gefäß (101), enthaltend einen Anionentauscher T, der mit Carboxylat-Ionen beladen ist, um die quaternäre Ammonium-Halogenid-Verbindung A-Halo zumindest teilweise in eine quaternäre Ammonium-Carboxylat-Verbindung A-Carb umzusalzen und eine Zusammensetzung Z1 umfassend die Ammonium-Carboxylat-Verbindung A-Carb zu erhalten, und um den Anionentauscher T zumindest teilweise mit Halogenid-Ionen, vorzugsweise Chlorid-Ionen, zu beladen;
b) Durchleiten mindestens eines Carboxylat-enthaltenden Regenerierungsmittels R-Carb durch das Ionentausch-Gefäß (101), um den mit Halogenid-Ionen beladenen Anionentauscher T zumindest teilweise mit Carboxylat-Ionen zu beladen, und das Carboxylat enthaltende Regenerierungsmittel R-Carb in eine Zusammensetzung Z2 umfassend ein Halogenidsalz R-Halo umzuwandeln;
wobei die Sequenz der Schritte a) und b) mit Schritt a) oder Schritt b) beginnen kann und wiederholt durchgeführt wird, und wobei die quaternäre Ammonium-Carboxylat-Verbindung A-Carb sich von der quaternären Ammonium-Halogenid-Verbindung A-Halo dadurch unterscheidet, dass die Halogenid-Ionen zumindest teilweise durch Carboxylat-Ionen ausgetauscht sind,
wobei das Ionentausch-Gefäß (101) mindestens eine erste Öffnung (102) und mindestens eine zweite Öffnung (103) hat, und die quaternäre Ammonium-Halogenid-Verbindung A-Halo in flüssiger Form oder als Lösung enthaltend mindestens 30 Gew.-% der Ammonium-Halogenid-Verbindung A-Halo, bezogen auf das Gewicht der Lösung, in das Ionentausch-Gefäß (101) durch die erste Öffnung (102) eingeführt wird, und durch Einführen mindestens eines anderen Fluids F, bevorzugt entionisierten Wassers, in die erste Öffnung (102) durch das Ionentausch-Gefäß (101) in Richtung der zweiten Öffnung (103) gedrückt wird.

2. Verfahren gemäß Anspruch 1, wobei die quaternäre Ammonium-Carboxylat-Verbindung A-Carb ein flüssiges oder wasserlösliches Polymer P-Carb mit Wiederholungseinheiten umfassend quaternäre Ammoniumgruppen ist, wobei mindestens 50 Mol-%, bevorzugt mindestens 90 Mol-% der Gegenionen der Ammoniumgruppen Carboxylationen sind.

3. Verfahren gemäß Anspruch 2, wobei das Polymer P-Carb Wiederholungseinheiten der Struktur (I) umfasst, 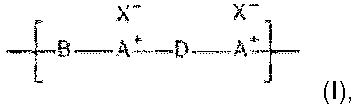 wobei
A⁺ ausgewählt ist aus kationischen Gruppen der Strukturen (A1) und (A2), bevorzugt (A1); 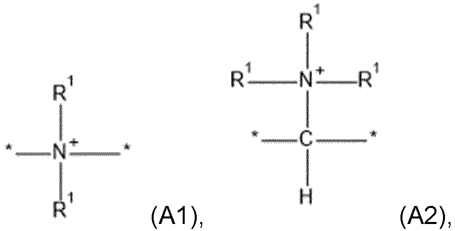
B ausgewählt ist aus Gruppen der Strukturen (B1) und (B2), bevorzugt (B1); 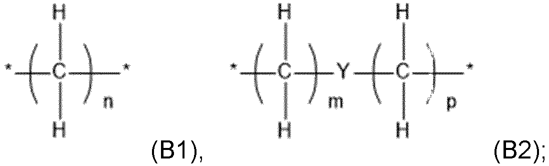
D ausgewählt ist aus Gruppen der Struktur (B2);
X⁻ ausgewählt sind aus Carboxylat-Ionen, bevorzugt Alkylcarboxylat-Ionen mit 2 bis 5 Kohlenstoffatomen, und Halogenid-Ionen, bevorzugt Chlorid-Ionen, wobei mindestens 50 Mol-%, bevorzugt mindestens 90 Mol-% der X⁻ im Polymer P-Carb Carboxylat-Ionen sind;
R¹ unabhängig voneinander ausgewählt sind aus Alkylgruppen mit 1 bis 4 Kohlenstoffatomen, bevorzugt Methyl;
Y ausgewählt ist aus O, S und N(R²), bevorzugt O;
R² ausgewählt ist aus einem Wasserstoffatom und Alkylgruppen mit 1 bis 4 Kohlenstoffatomen, bevorzugt Methyl;
n, m und p ausgewählt sind aus 2, 3 und 4; und
* die Bindungsstellen der jeweiligen Gruppe in der Polymerkette kennzeichnet.

4. Verfahren gemäß Anspruch 3, wobei die Wiederholungseinheiten der Struktur (I) die Struktur (la) haben 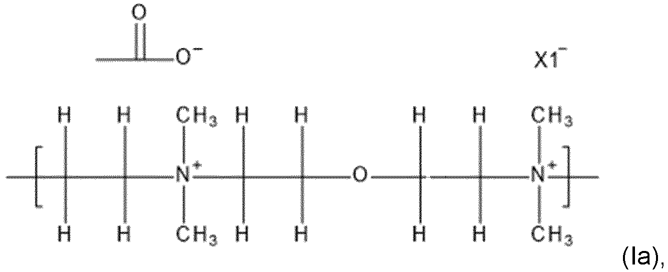 wobei
X1⁻ ausgewählt ist aus Chlorid-Ionen und Acetat-Ionen, und bevorzugt mindestens 50 Mol-%, mehr bevorzugt mindestens 80 Mol-%, mehr bevorzugt mindestens 90 Mol-% der X1⁻ im Polymer P-Carb Acetat-Ionen sind.

5. Verfahren gemäß einem der Ansprüche 1 bis 4, wobei das Regenerierungsmittel R-Carb ein Metall-Carboxylat ist, bevorzugt Natriumacetat, welches in Form einer wässrigen Lösung umfassend 20 bis 40 Gew.-%, bevorzugt 23 bis 38 Gew.-%, mehr bevorzugt 28 bis 33 Gew.-%, bezogen auf das Gewicht der wässrigen Lösung, des Metall-Carboxylats vorliegt.

6. Verfahren gemäß einem der Ansprüche 1 bis 5, wobei das Gewichtsverhältnis von in Schritt b) durchgeleitetem Regenerierungsmittel R-Carb zu in Schritt a) durchgeleiteter quaternärer Ammoniumhalogenid-Verbindung A-Halo im Bereich von 1,5:1 bis 20:1, bevorzugt 2:1 bis 15:1, mehr bevorzugt 2,5:1 bis 10:1, mehr bevorzugt 3:1 bis 7:1 liegt.

7. Verfahren gemäß einem der Ansprüche 1 bis 6, wobei die quaternäre Ammonium-Halogenid-Verbindung A-Halo flüssig ist oder in Form einer wässrigen Lösung umfassend 35 bis 95 Gew.-%, bevorzugt 40 bis 85 Gew.-%, mehr bevorzugt 45 bis 75 Gew.-%, mehr bevorzugt 55 bis 65 Gew.-%, bezogen auf das Gewicht der wässrigen Lösung, vorliegt.

8. Verfahren gemäß einem der Ansprüche 1 bis 7, wobei der Anionentauscher T ein gelförmiges Styrolpolymer mit daran gebundenen quaternären Ammoniumgruppen ist.

9. Verfahren gemäß einem der Ansprüche 1 bis 8, wobei in dem Ionentausch-Gefäß (101) die erste Öffnung (102) und die zweite Öffnung (103) in einem Abstand d zueinander angeordnet sind, wobei Schritt a) erfolgt durch:
a1) Einführen einer festgelegten Menge M1 der quaternären Ammonium-Halogenid-Verbindung A-Halo in das lonentausch-Gefäß (101) durch die erste Öffnung (102);
a2) Einführen einer festgelegten Menge M2 des Fluids F in das Ionentausch-Gefäß (101) durch die erste Öffnung (102),
a3) Sammeln der aus der zweiten Öffnung (103) austretenden Zusammensetzung Z1 in einem Sammelgefäß (200), beginnend zu einem Zeitpunkt t1 und endend zu einem Zeitpunkt t2;
wobei Schritt b) erfolgt durch:
b1) Einführen einer festgelegten Menge M3 des Regenerierungsmittels R-Carb in das Ionentausch-Gefäß (101) durch die erste Öffnung (102) oder die zweite Öffnung (103);
b2) Einführen einer festgelegten Menge M4 des Fluids F durch die erste Öffnung (102) oder die zweite Öffnung (103),
b3) Sammeln der Zusammensetzung Z2, und des Fluids F, die aus der ersten Öffnung (102) oder der zweiten Öffnung (103) austreten, in einem anderen Gefäß (300) als dem Sammelgefäß (200), oder Entsorgen von diesen, beginnend zum Zeitpunkt t2 und endend zum Zeitpunkt t1 der nachfolgenden Wiederholung der Sequenz der Schritte a) und b),
wobei die festgelegten Mengen wie folgt sind:
M1 ist die Menge der quaternären Ammonium-Halogenid-Verbindung A-Halo, die bei der im Ionentausch-Gefäß (101) enthaltenen Menge an mit Carboxylationen beladenem Anionentauscher T einem Austausch von mindestens 50 Mol-%, bevorzugt mindestens 90 Mol-% der Halogenid-Ionen gegen Carboxylat-Ionen unterzogen werden kann;
M2 ist die Menge des Fluids F, die ausreichend ist, um die quaternäre Ammonium-Halogenid-Verbindung A-Halo und die Zusammensetzung Z1 enthaltend die Ammonium-Carboxylat-Verbindung A-Carb entlang des Abstands d durch das Ionentausch-Gefäß (101) so weit zu drücken, dass eine Vermischung mit dem nachfolgend eingeführten Regenerierungsmittel R-Carb im Wesentlichen verhindert wird;
M3 ist die Menge des Regenerierungsmittels R-Carb, die erforderlich ist, um den Anionentauscher T mit Carboxylat-Ionen zu beladen, sodass die Menge M1 der quaternären Ammonium-Halogenid-Verbindung A-Halo einem Austausch von mindestens 50 Mol-%, bevorzugt mindestens 90 Mol-% der Halogenid-Ionen gegen Carboxylat-Ionen unterzogen werden kann, wobei bevorzugt das Gewichtsverhältnis M3:M1 im Bereich von 1,5:1 bis 20:1, bevorzugt 2:1 bis 15:1, mehr bevorzugt 2,5:1 bis 10:1, mehr bevorzugt 3:1 bis 7:1 liegt;
M4 ist die Menge des Fluids F, die erforderlich ist, um das Regenerierungsmittel R-Carb und die Zusammensetzung Z2 umfassend das Halogenidsalz R-Halo entlang des Abstands d durch das Ionentausch-Gefäß (101) so weit zu drücken, dass eine Vermischung mit der nachfolgend eingeführten Ammonium-Halogenid-Verbindung A-Halo im Wesentlichen verhindert wird;
und wobei der Zeitpunkt t1 der Zeitpunkt ist, zu dem die Zusammensetzung Z1 enthaltend die quaternäre Ammonium-Carboxylat-Verbindung A-Carb beginnt, aus der zweiten Öffnung (103) auszutreten, und der Zeitpunkt t2 der Zeitpunkt ist, zu dem die Zusammensetzung Z1 enthaltend die quaternäre Ammonium-Carboxylat-Verbindung A-Carb aufhört, aus der zweiten Öffnung (103) auszutreten.

10. Verwendung einer organischen quaternären Ammonium-Carboxylat-Verbindung A-Carb, wie in einem der Ansprüche 2 bis 4 definiert, oder erhältlich durch das Verfahren gemäß einem der Ansprüche 2 bis 9 als Additiv in einer Kühlschmierstoff-Emulsion für Werkzeugmaschinen, bevorzugt zur Minderung der Schaumbildungsneigung.

11. Kühlschmierstoff umfassend das Polymer P-Carb wie in einem der Ansprüche 2 bis 4 definiert, bevorzugt in einer Menge von 0,05 bis 5 Gew.-%, bevorzugt 0,1 bis 2 Gew.-%, mehr bevorzugt 0,15 bis 1 Gew.-%, mehr bevorzugt 0,2 bis 0,5 Gew.-%, bezogen auf das Gewicht des Kühlschmierstoffs.

12. Kühlschmierstoff-Emulsion umfassend den Kühlschmierstoff gemäß Anspruch 11, bevorzugt in einer Menge von 5,5 bis 15 Gew.-%, bevorzugt 6,5 bis 9 Gew.-%, mehr bevorzugt 7 bis 8,5 Gew.-%, bezogen auf das Gewicht der Kühlschmierstoff-Emulsion, und Wasser.

13. Polymer P-Carb, wie in Anspruch 3 oder 4 definiert.

14. Vorrichtung (100) umfassend ein Ionentausch-Gefäß (101) mit mindestens einer ersten Öffnung (102) und mindestens einer zweiten Öffnung (103), die in einem Abstand d zueinander angeordnet sind, und einen Anionentauscher T zwischen der ersten Öffnung (102) und der zweiten Öffnung (103), der mit Carboxylat-Ionen oder Halogenid-Ionen beladen ist, ein Sammelgefäß (200) zum Sammeln einer Zusammensetzung Z1 umfassend eine quaternäre Ammonium-Carboxylat-Verbindung A-Carb, mindestens ein Mittel (401, 402, 501, 502, 601, 602) zum selektiven Einführen von einer von mindestens drei Komponenten in das Ionentausch-Gefäß (101), und mindestens ein Mittel (201) zum ein- und ausstellen des Durchflusses von Komponenten aus dem Ionentausch-Gefäß (101) in das Sammelgefäß (200) und optional andere Gefäße (300), wobei die Vorrichtung eingerichtet ist, das Verfahren gemäß einem der Ansprüche 5 bis 9 auszuführen.

15. Vorrichtung (100) gemäß Anspruch 14, ferner umfassend mindestens einen Sensor (104) an der zweiten Öffnung (103), zum Bestimmen mindestens eines Parameters, bevorzugt des Brechungsindexes, der Leitfähigkeit oder des pH-Werts, der Zusammensetzung Z1, und anderer aus der zweiten Öffnung (103) austretenden Komponenten, wobei die Ausprägung des mindestens einen Parameters sich für die Zusammensetzung Z1 und für die anderen aus der zweiten Öffnung (103) austretenden Komponenten unterscheidet.

## Claims

1. A process for the preparation of a quaternary ammonium carboxylate compound A-Carb, comprising the steps of:
a) passing a quaternary ammonium halide compound A-Halo, preferably a quaternary ammonium chloride compound, through an ion exchange vessel (101) containing an anion exchanger T loaded with carboxylate ions, to at least partially trans-salify the quaternary ammonium halide compound A-Halo into a quaternary ammonium carboxylate compound A-Carb and to obtain a composition Z1 comprising the ammonium carboxylate compound A-Carb, and to load the anion exchanger T at least partially with halide ions, preferably chloride ions;
b) passing at least one carboxylate-containing regenerating agent R-Carb through the ion exchange vessel (101) to at least partially load the anion exchanger T, which is loaded with halide ions, with carboxylate ions, and to convert the carboxylate-containing regenerating agent R-Carb into a composition Z2 comprising a halide salt R-Halo;
wherein the sequence of steps a) and b) may begin with step a) or step b) and is performed repeatedly, and wherein the quaternary ammonium carboxylate compound A-Carb differs from the quaternary ammonium halide compound A-Halo in that the halide ions are at least partially exchanged for carboxylate ions,
wherein the ion exchange vessel (101) has at least a first opening (102) and at least a second opening (103), and the quaternary ammonium halide compound A-Halo in liquid form or as a solution containing at least 30 wt.% of the ammonium halide compound A-Halo, based on the weight of the solution, is introduced into the ion exchange vessel (101) through the first opening (102), and is pushed through the ion exchange vessel (101) from the first opening (102) toward the second opening (103) by introducing at least one other fluid F, preferably deionized water, into the first opening (102).

2. The process according to claim 1, wherein the quaternary ammonium carboxylate compound A-Carb is a liquid or water-soluble polymer P-Carb having repeating units comprising quaternary ammonium groups, wherein at least 50 mol%, preferably at least 90 mol%, of the counterions of the ammonium groups are carboxylates.

3. The process according to claim 2, wherein the polymer P-Carb comprises repeating units of structure (I), 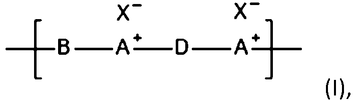 wherein
A⁺ is selected from cationic groups of structures (A1) and (A2), preferably (A1); 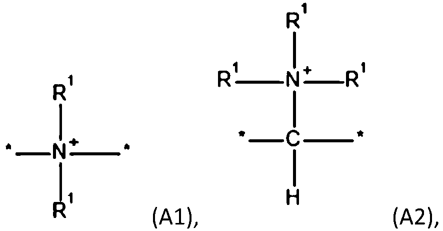
B is selected from groups of structures (B1) and (B2), preferably (B1); 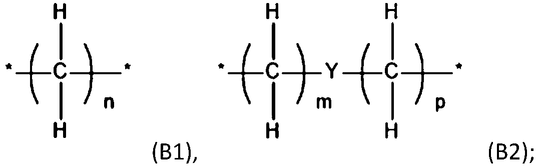
D is selected from groups of structure (B2);
X⁻ are selected from carboxylate ions, preferably alkyl carboxylate ions having 2 to 5 carbon atoms, and halide ions, preferably chloride ions, wherein at least 50 mol%, preferably at least 90 mol%, of the X⁻ in the polymer P-Carb are carboxylate ions;
R¹ are independently selected from alkyl groups having 1 to 4 carbon atoms, preferably methyl;
Y is selected from O, S, and N(R²), preferably O;
R² is selected from a hydrogen atom and alkyl groups having 1 to 4 carbon atoms, preferably methyl;
n, m, and p are selected from 2, 3, and 4; and
* denotes the binding sites of the respective group in the polymer chain.

4. The process according to claim 3, wherein the repeating units of structure (I) have the structure (la) 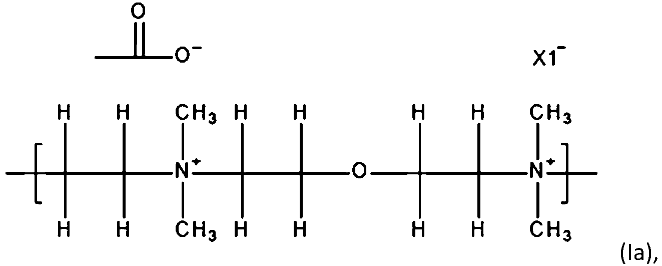 wherein
X1⁻ is selected from chloride ions and acetate ions, and preferably at least 50 mol%, more preferably at least 80 mol%, more preferably at least 90 mol% of the X1⁻ in the polymer P-Carb are acetate ions.

5. The process according to any one of claims 1 to 4, wherein the regenerating agent R-Carb is a metal carboxylate, preferably sodium acetate, which is present in the form of an aqueous solution comprising 20 to 40 wt.%, preferably 23 to 38 wt.%, more preferably 28 to 33 wt.%, based on the weight of the aqueous solution, of the metal carboxylate.

6. The process according to any one of claims 1 to 5, wherein the weight ratio of regenerating agent R-Carb passed through in step b) to quaternary ammonium halide compound A-Halo passed through in step a) is in the range of 1.5:1 to 20:1, preferably 2:1 to 15:1, more preferably 2.5:1 to 10:1, more preferably 3:1 to 7:1.

7. The process according to any one of claims 1 to 6, wherein the quaternary ammonium halide compound A-Halo is liquid or is in the form of an aqueous solution comprising 35 to 95 wt.%, preferably 40 to 85 wt.%, more preferably 45 to 75 wt.%, more preferably 55 to 65 wt.%, based on the weight of the aqueous solution.

8. The process according to any one of claims 1 to 7, wherein the anion exchanger T is a gel-like styrene polymer having quaternary ammonium groups bound thereto.

9. The process according to any one of claims 1 to 8, wherein in the ion exchange vessel (101) the first opening (102) and the second opening (103) are arranged at a distance d from one another, wherein step a) is performed by:
a1) introducing a predetermined amount M1 of the quaternary ammonium halide compound A-Halo into the ion exchange vessel (101) through the first opening (102);
a2) introducing a predetermined amount M2 of the fluid F into the ion exchange vessel (101) through the first opening (102),
a3) collecting the composition Z1 exiting from the second opening (103) in a collection vessel (200), beginning at a time t1 and ending at a time t2;
wherein step b) is performed by:
b1) introducing a predetermined amount M3 of the regenerating agent R-Carb into the ion exchange vessel (101) through the first opening (102) or the second opening (103);
b2) introducing a predetermined amount M4 of the fluid F through the first opening (102) or the second opening (103),
b3) collecting composition Z2 and fluid F, which exit from the first opening (102) or the second opening (103), in a vessel (300) other than the collection vessel (200), or disposing of them, beginning at time t2 and ending at time t1 of the subsequent repetition of the sequence of steps a) and b),
where the predetermined quantities are as follows:
M1 is the amount of the quaternary ammonium halide compound A-Halo, which can be subjected to an exchange of at least 50 mol%, preferably at least 90 mol%, of the halide ions for carboxylate ions with the amount of carboxylate-loaded anion exchanger T contained in the ion exchange vessel (101);
M2 is the amount of fluid F sufficient to push the quaternary ammonium halide compound A-Halo and the composition Z1 containing the ammonium carboxylate compound A-Carb along the distance d through the ion exchange vessel (101) to such an extent that mixing with the subsequently introduced regenerating agent R-Carb is essentially prevented;
M3 is the amount of regenerating agent R-Carb required to load the anion exchanger T with carboxylate ions, such that the amount M1 of the quaternary ammonium halide compound A-Halo can be subjected to an exchange of at least 50 mol%, preferably at least 90 mol% of the halide ions for carboxylate ions, wherein preferably the weight ratio M3:M1 is in the range of 1.5:1 to 20:1, more preferably 2:1 to 15:1, more preferably 2.5:1 to 10:1, more preferably 3:1 to 7:1;
M4 is the amount of fluid F required to push the regenerating agent R-Carb and the composition Z2 comprising the halide salt R-Halo along the distance d through the ion exchange vessel (101) to such an extent that mixing with the subsequently introduced ammonium halide compound A-Halo is essentially prevented;
and wherein the time t1 is the time at which the composition Z1 containing the quaternary ammonium carboxylate compound A-Carb begins to exit the second opening (103), and the time t2 is the time at which the composition Z1 containing the quaternary ammonium carboxylate compound A-Carb ceases to exit the second opening (103).

10. The use of an organic quaternary ammonium carboxylate compound A-Carb, as defined in any one of claims 2 to 4, or obtainable by the method according to any one of claims 2 to 9, as an additive in a cooling lubricant emulsion for machine tools, preferably for reducing the tendency to foam.

11. A cooling lubricant comprising the polymer P-Carb as defined in any one of claims 2 to 4, preferably in an amount of 0.05 to 5 wt.%, preferably 0.1 to 2 wt.%, more preferably 0.15 to 1 wt.%, more preferably 0.2 to 0.5 wt.%, based on the weight of the cooling lubricant.

12. A cooling lubricant emulsion comprising the cooling lubricant according to claim 11, preferably in an amount of 5.5 to 15 wt.%, more preferably 6.5 to 9 wt.%, more preferably 7 to 8.5 wt.%, based on the weight of the cooling lubricant emulsion, and water.

13. Polymer P-Carb, as defined in claim 3 or 4.

14. Apparatus (100) comprising an ion exchange vessel (101) having at least a first opening (102) and at least a second opening (103) arranged at a distance d from one another, and an anion exchanger T between the first opening (102) and the second opening (103), which is loaded with carboxylate ions or halide ions, a collection vessel (200) for collecting a composition Z1 comprising a quaternary ammonium carboxylate compound A-Carb, at least one means (401, 402, 501, 502, 601, 602) for selectively introducing one of at least three components into the ion-exchange vessel (101), and at least one means (201) for turning on and off the flow of components from the ion exchange vessel (101) into the collection vessel (200) and optionally other vessels (300), wherein the apparatus is configured to perform the method according to any one of claims 5 to 9.

15. A device (100) according to claim 14, further comprising at least one sensor (104) at the second opening (103), for determining at least one parameter, preferably the refractive index, conductivity, or pH value, of composition Z1 and other components emerging from the second opening (103), wherein the value of the at least one parameter differs for composition Z1 and for the other components exiting the second opening (103).

## Revendications

1. Procédé pour la fabrication d'un composé carboxylate d'ammonium quaternaire A-Carb, comprenant les étapes :
a) le passage d'un composé halogénure d'ammonium quaternaire A-Halo, de préférence d'un composé chlorure d'ammonium quaternaire, à travers un récipient d'échange d'ions (101), contenant un échangeur d'anions T, qui est chargé en ions carboxylate, afin de convertir au moins partiellement le composé halogénure d'ammonium quaternaire A-Halo en un composé carboxylate d'ammonium quaternaire A-Carb et d'obtenir une composition Z1 comprenant le composé carboxylate d'ammonium A-Carb, et afin de charger au moins partiellement l'échangeur d'anions T en ions halogénure, de préférence en ions chlorure ;
b) le passage d'au moins un agent de régénération contenant du carboxylate R-Carb à travers le récipient d'échange d'ions (101), afin de charger au moins partiellement l'échangeur d'anions T, chargé en ions halogénure, en ions carboxylate, et de convertir l'agent de régénération contenant du carboxylate R-Carb en une composition Z2 comprenant un sel d'halogénure R-Halo ;
où la séquence des étapes a) et b) peut commencer par l'étape a) ou l'étape b) et est répétée, et où le composé carboxylate d'ammonium quaternaire A-Carb se distingue du composé halogénure d'ammonium quaternaire A-Halo en ce que les ions halogénure sont au moins partiellement échangés par des ions carboxylate,
où le récipient d'échange d'ions (101) présente au moins une première ouverture (102) et au moins une deuxième ouverture (103), et le composé halogénure d'ammonium quaternaire A-Halo est introduit dans le récipient d'échange d'ions (101) sous forme liquide ou sous forme de solution comprenant au moins 30 % en poids du composé halogénure d'ammonium quaternaire A-Halo, par rapport au poids de la solution, à travers la première ouverture (102), et est poussé à travers le récipient d'échange d'ions (101) en direction de la deuxième ouverture (103) par introduction d'au moins un autre fluide F, de préférence de l'eau déionisée, dans la première ouverture (102).

2. Procédé selon la revendication 1, où le composé carboxylate d'ammonium quaternaire A-Carb est un polymère liquide ou soluble dans l'eau P-Carb comprenant des unités de répétition comprenant des groupes ammonium quaternaires, où au moins 50 % en moles, de préférence au moins 90 % en moles des contre-ions des groupes ammonium sont des ions carboxylate.

3. Procédé selon la revendication 2, où le polymère P-Carb comprend des unités de répétition de la structure (I), 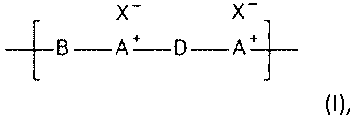 où
A⁺ est choisi parmi les groupes cationiques de structures (A1) et (A2), de préférence (A1) ; 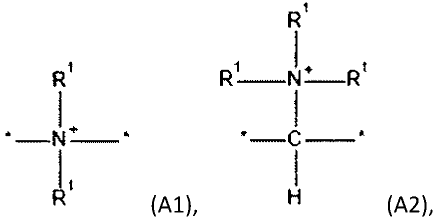
B est choisi parmi les groupes de structures (B1) et (B2), de préférence (B1) ; 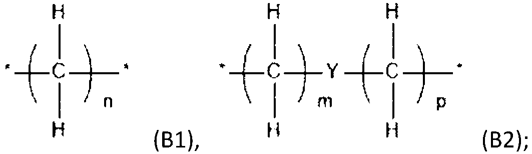
D est choisi parmi les groupes de structure (B2) ;
les X⁻ sont choisis parmi des ions carboxylate, de préférence des ions alkylcarboxylate comportant 2 à 5 atomes de carbone, et des ions halogénure, de préférence des ions chlorure, où au moins 50 % en moles, de préférence au moins 90 % en moles des X⁻ dans le polymère P-Carb sont des ions carboxylate ;
les R¹ sont choisis indépendamment les uns des autres parmi des groupes alkyle comportant 1 à 4 atomes de carbone, de préférence méthyle ;
Y est choisi parmi O, S und N(R²), de préférence O ;
R² est choisi parmi un atome d'hydrogène et les groupes alkyles ayant de 1 à 4 atomes de carbone, de préférence méthyle ;
n, m, et p sont choisis parmi 2, 3, et 4 ; et
* identifie les sites de liaison du groupe respectif dans la chaîne polymère.

4. Procédé selon la revendication 3, dans lequel les unités de répétition de la structure (I) ont la structure (la) 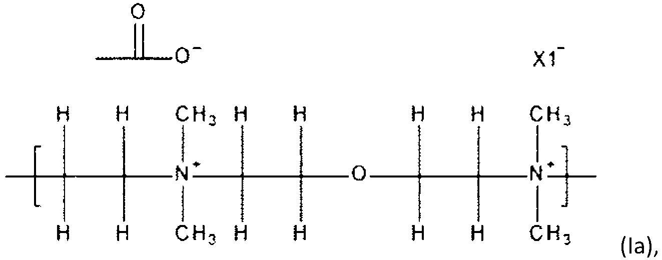 où
X1⁻ est choisi parmi des ions chlorure et des ions acétate, et de préférence au moins 50 % en moles, de manière davantage préférée au moins 80 % en moles, de manière encore davantage préférée au moins 90 % en moles des X1⁻ dans le polymère P-Carb sont des ions acétate.

5. Procédé selon l'une des revendications 1 à 4, où l'agent de régénération R-Carb est un carboxylate de métal, de préférence acétate de sodium, qui se présente sous la forme d'une solution aqueuse comprenant 20 à 40 % en poids, de préférence 23 à 38 % en poids, de manière davantage préférée 28 à 33 % en poids, par rapport au poids de la solution aqueuse, du carboxylate de métal.

6. Procédé selon l'une des revendications 1 à 5, où le rapport en poids de l'agent de régénération R-Carb passé à travers à l'étape b) au composé halogénure d'ammonium quaternaire A-Halo passé à travers à l'étape a) est dans une plage de 1,5:1 à 20:1, de préférence 2:1 à 15:1, de manière davantage préférée 2,5:1 à 10:1, de manière encore davantage préférée 3:1 à 7:1.

7. Procédé selon l'une des revendications 1 à 6, où le composé halogénure d'ammonium quaternaire A-Halo est liquide ou se présente sous la forme d'une solution aqueuse comprenant 35 à 95 % en poids, de préférence 40 à 85 % en poids, de manière davantage préférée 45 à 75 % en poids, de manière davantage préférée 55 à 65 % en poids, par rapport au poids de la solution aqueuse.

8. Procédé selon l'une des revendications 1 à 7, où l'échangeur d'anions T est un polymère de styrène sous forme de gel avec des groupes ammonium quaternaires liés à celui-ci.

9. Procédé selon l'une des revendications 1 à 8, où dans le récipient d'échange d'ions (101) la première ouverture (102) et la deuxième ouverture (103) sont disposées à une distance d l'une de l'autre, où l'étape a) est effectuée par :
a1) introduction d'une quantité déterminée M1 du composé halogénure d'ammonium quaternaire A-Halo dans le récipient d'échange d'ions (101) à travers la première ouverture (102) ;
a2) introduction d'une quantité déterminée M2 du fluide F dans le récipient d'échange d'ions (101) à travers la première ouverture (102),
a3) collecte de la composition Z1 sortant de la deuxième ouverture (103) dans un récipient de collecte (200), en commençant à un instant t1 et en terminant à un instant t2 ;
où l'étape b) est effectuée par :
b1) introduction d'une quantité déterminée M3 de l'agent de régénération R-Carb dans le récipient d'échange d'ions (101) à travers la première ouverture (102) ou la deuxième ouverture (103) ;
b2) introduction d'une quantité déterminée M4 du fluide F à travers la première ouverture (102) ou la deuxième ouverture (103),
b3) collecte de la composition Z2 et du fluide F, qui sortent de la première ouverture (102) ou de la deuxième ouverture (103), dans un autre récipient (300) que le récipient de collecte (200), ou élimination de ceux-ci, en commençant à l'instant t2 et en terminant à l'instant t1 de la répétition suivante de la séquence des étapes a) et b),
où les quantités déterminées sont comme suit :
M1 est la quantité du composé halogénure d'ammonium quaternaire A-Halo qui, pour la quantité d'échangeur d'anions T chargé en ions carboxylate contenue dans le récipient d'échange d'ions (101), peut être soumise à un échange d'au moins 50 % en moles, de préférence d'au moins 90 % en moles, des ions halogénure contre des ions carboxylate ;
M2 est la quantité du fluide F qui est suffisante pour pousser le composé halogénure d'ammonium quaternaire A-Halo et la composition Z1 comprenant le composé carboxylate d'ammonium quaternaire A-Carb le long de la distance d à travers le récipient d'échange d'ions (101) de telle sorte qu'un mélange avec l'agent de régénération R-Carb introduit ultérieurement est essentiellement empêché ;
M3 est la quantité de l'agent de régénération R-Carb qui est nécessaire pour charger l'échangeur d'anions T en ions carboxylate, de sorte que la quantité M1 du composé halogénure d'ammonium quaternaire A-Halo peut être soumise à un échange d'au moins 50 % en moles, de préférence d'au moins 90 % en moles, des ions halogénure contre des ions carboxylate, où de préférence le rapport en poids M3:M1 est dans une plage de 1,5:1 à 20:1, de préférence 2:1 à 15:1, de manière davantage préférée 2,5:1 à 10:1, de manière davantage préférée 3:1 à 7:1 ;
M4 est la quantité du fluide F qui est nécessaire pour pousser l'agent de régénération R-Carb et la composition Z2 comprenant le sel d'halogénure R-Halo le long de la distance d à travers le récipient d'échange d'ions (101) de telle sorte qu'un mélange avec le composé halogénure d'ammonium quaternaire A-Halo introduit ultérieurement est essentiellement empêché ;
et où l'instant t1 est l'instant auquel la composition Z1 comprenant le composé carboxylate d'ammonium quaternaire A-Carb commence à sortir de la deuxième ouverture (103), et l'instant t2 est l'instant auquel la composition Z1 comprenant le composé carboxylate d'ammonium quaternaire A-Carb cesse de sortir de la deuxième ouverture (103).

10. Utilisation d'un composé carboxylate d'ammonium quaternaire organique A-Carb, tel que défini dans l'une des revendications 2 à 4, ou pouvant être obtenu par le procédé selon l'une des revendications 2 à 9, en tant qu'additif dans une émulsion de fluide de coupe pour machines-outils, de préférence pour la réduction de la tendance à la formation de mousse.

11. Fluide de coupe comprenant le polymère P-Carb tel que défini dans l'une des revendications 2 à 4, de préférence en une quantité de 0,05 à 5 % en poids, de préférence 0,1 à 2 % en poids, de manière davantage préférée 0,15 à 1 % en poids, de manière davantage préférée 0,2 à 0,5 % en poids, par rapport au poids du fluide de coupe.

12. Émulsion de fluide de coupe comprenant le fluide de coupe selon la revendication 11, de préférence en une quantité de 5,5 à 15 % en poids, de préférence 6,5 à 9 % en poids, de manière davantage préférée 7 à 8,5 % en poids, par rapport au poids de l'émulsion de fluide de coupe, et de l'eau.

13. Polymère P-carb, tel que défini dans la revendication 3 ou 4.

14. Dispositif (100) comprenant un récipient d'échange d'ions (101) avec au moins une première ouverture (102) et au moins une deuxième ouverture (103), qui sont disposées à une distance d l'une de l'autre, et un échangeur d'anions T entre la première ouverture (102) et la deuxième ouverture (103), qui est chargé en ions carboxylate ou en ions halogénure, un récipient de collecte (200) pour la collecte d'une composition Z1 comprenant un composé carboxylate d'ammonium quaternaire A-Carb, au moins un moyen (401, 402, 501, 502, 601, 602) pour l'introduction sélective de l'un d'au moins trois composants dans le récipient d'échange d'ions (101), et au moins un moyen (201) pour l'activation et la désactivation de l'écoulement de composants du récipient d'échange d'ions (101) dans le récipient de collecte (200) et, en option, dans d'autres récipients (300), où le dispositif est configuré pour exécuter le procédé selon l'une des revendications 5 à 9.

15. Dispositif (100) selon la revendication 14, comprenant en outre au moins un capteur (104) au niveau de la deuxième ouverture (103), pour déterminer au moins un paramètre, de préférence l'indice de réfraction, la conductivité ou le pH, de la composition Z1 et d'autres composants sortant de la deuxième ouverture (103), où la valeur de l'au moins un paramètre diffère pour la composition Z1 et pour les autres composants sortant de la deuxième ouverture (103).
